(19) **Europäisches Patentamt / European Patent Office / Office européen des brevets**

(11) **EP 2 135 665 A1**

(12) # EUROPEAN PATENT APPLICATION
published in accordance with Art. 153(4) EPC

(43) Date of publication:
**23.12.2009 Bulletin 2009/52**

(21) Application number: **08721475.5**

(22) Date of filing: **06.03.2008**

(51) Int Cl.:
*B01D 53/94* (2006.01)  *F23C 13/00* (2006.01)
*F23C 99/00* (2006.01)  *F23N 1/02* (2006.01)
*F23N 5/00* (2006.01)

(86) International application number:
**PCT/JP2008/054055**

(87) International publication number:
**WO 2008/111486 (18.09.2008 Gazette 2008/38)**

(84) Designated Contracting States:
**DE**

(30) Priority: **15.03.2007 JP 2007066309**
**16.05.2007 JP 2007130789**

(71) Applicant: **Miura Co., Ltd.**
**Matsuyama-shi, Ehime 799-2696 (JP)**

(72) Inventors:
• **TANAKA, Osamu**
**Matsuyama-shi**
**Ehime 799-2696 (JP)**
• **YASUI, Kenji**
**Matsuyama-shi**
**Ehime 799-2696 (JP)**

• **NAKASHIMA, Masashi**
**Matsuyama-shi**
**Ehime 799-2696 (JP)**
• **SHINDO, Takashi**
**Matsuyama-shi**
**Ehime 799-2696 (JP)**
• **YAMAGUCHI, Kohei**
**Matsuyama-shi**
**Ehime 799-2696 (JP)**
• **KOHAKU, Motoshi**
**Matsuyama-shi**
**Ehime 799-2696 (JP)**

(74) Representative: **Wallinger, Michael**
**Wallinger Ricker Schlotter Foerstl**
**Patent- und Rechtsanwälte**
**Zweibrückenstrasse 5-7**
**80331 München (DE)**

(54) **CATALYST DETERIORATION PREVENTING APPARATUS AND LOW NOx COMBUSTION APPARATUS**

(57) Provided is a catalyst degradation preventing apparatus, which is for a catalyst device containing a catalyst component that comes into contact with gas to chemically change the gas, in which the catalyst device is provided with a poisoning substance removing device on a primary side thereof, for removing a poisoning substance which is contained in the gas and adsorbs to the catalyst component or forms a compound with the catalyst component. Further, the poisoning substance removing device and the catalyst device are provided with an interval placed therebetween and to be exchangeable with each other, or a carrier of a component that adsorbs to the poisoning substance of the poisoning substance removing device or forms a compound with the poisoning substance and a carrier of a catalyst component of the catalyst device are integrally formed so as to be exchangeable. According to the apparatus, the decrease in performance of the catalyst device can be prevented, and the effect of low pollution can be retained for a long period of time.

FIG. 2

**Description**

Technical Field

The present invention relates to a catalyst degradation preventing apparatus and a low NOx combustion apparatus, which are applied to a water-tube boiler and a regenerator of an absorption refrigerator.
The present application claims priority based on JP 2007-66309 filed in Japan on March 15, 2007 and JP 2007-130789 filed in Japan on May 16, 2007, and the contents thereof are incorporated herein.

Background art of the Invention

Generally known principles of suppressing NOx emissions include the suppression of flame (combustion gas) temperatures and a decrease in retention time of combustion gas at high temperatures. As such, various technologies are available for decreasing the emission of NOx by applying these principles. Various methods have been proposed and put into practical use, for example, two-stage combustion, lean-rich combustion, exhaust gas recirculate combustion, water mixing combustion, steam injection combustion, and flame cooling combustion by a water tube group.
Moreover, NOx sources relatively small in capacity such as water-tube boilers are also beginning to be required for a further decrease in emission of NOx due to an increasing awareness of environmental problems. In this case, the decrease in NOx generation inevitably entails an increased amount of emitted CO, thus making it difficult to attain a simultaneous decrease in NOx and CO.
A cause of the above problem is that a simultaneous decrease in emission of NOx and CO is technically incompatible. More specifically, when temperatures of combustion gas are abruptly lowered and kept at temperatures of 900°C or less in an attempt to decrease the emission of NOx to result in an ample generation of CO, the thus generated CO is emitted before oxidization to increase the amount of emitted CO. In other words, temperatures of combustion gas are kept higher in an attempt to decrease the amount of emitted CO, thus resulting in an insufficient suppression of NOx generation.
In order to solve the above problem, the applicant has proposed low NOx and low CO emission technologies for decreasing the amount of CO as much as possible, which is generated in accordance with a decrease in the amount of NOx generation, and also suppressing temperatures of combustion gas so as to attain oxidation of the thus generated CO. The technologies are now commercially feasible (refer to Patent Documents 1 and 2). However, an actual value of emitted NOx remains to be about 25 ppm in the low NOx emission technologies described in Patent Documents 1 and 2.
In order to solve the above problem, the applicant has proposed a low NOx combustion method in which a NOx decreasing step is conducted to suppress temperatures of combustion gas so as to give priority to suppression of NOx generation rather than a decrease in the amount of emitted CO, thereby keeping the value of the thus generated NOx to a predetermined value or lower, and a CO decreasing step is, thereafter, conducted so as to keep the value of CO emitted from the NOx decreasing step to a predetermined value or lower (refer to Patent Documents 3 and 4). The technologies disclosed in Patent Documents 3 and 4 are able to decrease the amount of emitted NOx to a value lower than 10 ppm, but it is difficult to decrease the amount of emitted NOx to a value below 5 ppm. This is due to the fact that combustion characteristics inevitably entail NOx generation at 5 ppm or greater.
Then, in the low NOx emission technologies disclosed in Patent Documents 3 and 4, combustion is conducted at a high air-ratio combustion region where the air ratio is 1.38 or greater. In contrast, at a combustion region where the air ratio is close to 1, nitrogen oxides are generated in an increased amount, thus making it difficult to attain a simultaneous decrease in the amount of emitted NOx and CO. There is also posed a difficulty in controlling a stable combustion due to a possible occurrence of backfire where the air ratio is 1 or lower. Therefore, the low air ratio combustion region has hardly been subjected to research and development.
On the other hand, there is a growing demand for operations at a low air ratio to save energy.
Patent Document 1: Japanese Patent No. 3221582
Patent Document 2: U. S. Patent No. 5353748 (U.S. Patent corresponding to Patent Document 1)
Patent Document 3: Japanese unexamined Patent Application, First Publication No. 2004-125378
Patent Document 4: U. S. Patent No. 6792895 (U. S. Patent corresponding to Patent Document 2)

Disclosure of the Invention

Problems to be solved by the Invention

The inventors of the present application have sought for and studied a combustion method and a combustion apparatus capable of decreasing the emission amount of nitrogen oxides, decreasing the emission amount of carbon monoxide to a permissible range, and realizing the energy saving at a low air ratio in a combustion region at a low air ratio close to 1, which has hardly been studied.

Consequently, the inventors of the present application have achieved the development of an energy-saving combustion method and combustion apparatus with ultra-low pollution, which substantially decreases NOx and CO to substantially zero when the air ratio is decreased to substantially 1 using an oxidation reduction catalyst. The combustion method and the combustion apparatus have been filed in JP 2005-30034, JP 2006-184879, and the like.

The present invention is an improvement of these filed applications, and a main problem to be solved by the present invention is to prevent the decrease in performance of a catalyst device. Further, an additional problem of the present invention is to allow the effects of energy saving and low pollution to continue for a long period of time. Herein, "preventing the decrease in performance" is a concept including the delay in the decrease in performance. Further, "low pollution" means that NOx and CO are decreased.

The present invention has been accomplished in view of solving the above problems, and a first invention according to the present invention relates to a catalyst degradation preventing apparatus, which is for a catalyst device containing a catalyst component that comes into contact with gas to chemically change the gas. In this apparatus, the catalyst device is provided with a poisoning substance removing device on a primary side thereof, for removing a poisoning substance which is contained in the gas and adsorbs to the catalyst component or forms a compound with the catalyst component.

According to the first invention, a poisoning substance can be removed by adsorption with the poisoning substance removing device, so the performance of the catalyst device can be ensured for a long period of time.

In a second invention according to the present invention, according to the first invention, the poisoning substance removing device and the catalyst device are provided with an interval placed therebetween and to be exchangeable with each other.

According to the second invention, in addition to the effect of the first invention, the poisoning substance removing device and the catalyst device are provided separately so as to be exchanged, so only the poisoning substance removing device can be exchanged. Further, the poisoning substance removing device and the catalyst device are provided at a distance. Therefore, the function of the catalyst device can be enhanced by a leading effect, and gas is mixed between the poisoning substance removing device and the catalyst device, whereby a gas component can be made uniform.

In a third invention according to the present invention, according to the first invention, a carrier of a component that adsorbs to the poisoning substance of the poisoning substance removing device or forms a compound with the poisoning substance and a carrier of a catalyst component of the catalyst device are integrally formed so as to be exchangeable.

According to the third invention, in addition to the effect by the first invention, the poisoning substance removing device and the catalyst device are formed integrally, so the handling such as the attachment/detachment with respect to an apparatus can be performed easily.

In a fourth invention according to the present invention, according to the first invention, an amount of the catalyst component contained in the poisoning substance removing device is smaller than that of the catalyst device, including zero.

In addition to the effect by the first invention, the present invention can be configured at low cost with the use amount of a catalyst component decreased.

A fifth invention according to the present invention relates to a low NOx combustion apparatus, including: a burner for generating a gas containing oxygen, nitrogen oxides, and carbon monoxide by combustion; an endothermic device for absorbing heat from the gas; a catalyst device having a catalyst component for oxidizing carbon monoxide contained in the gas after passing through the endothermic device by oxygen and reducing nitrogen oxides by carbon monoxide; a poisoning substance removing device provided on a primary side of the catalyst device, for removing a poisoning substance containing at least sulfur, which is component contained in the gas and adsorbs to the catalyst or forms a compound with the catalyst component; a sensor for detecting an air ratio of the burner; and an air-ratio adjusting device for controlling an air ratio of the burner to a set air ratio based on a detected signal of the sensor. In this apparatus, the burner and the endothermic device are configured so as to adjust a concentration ratio of oxygen, nitrogen oxides, and carbon monoxide in a gas on a primary side of the catalyst device to a predetermined concentration ratio at which a concentration of nitrogen oxides on a secondary side of the catalyst device is decreased to substantially zero or a predetermined value or less, and a concentration of carbon monoxide on the secondary side of the catalyst device is decreased to substantially zero or a predetermined value or less, when the air ratio is adjusted to the set air ratio by the air-ratio adjusting device.

According to the present invention, a poisoning substance such as sulfur is removed by the poisoning substance removing device, so the performance of the catalyst device can be ensured for a long period of time. Consequently, the effects of decreasing NOx to zero and the effect of decreasing CO by the catalyst device can continue for a long period of time.

A sixth invention according to the present invention relates to a low NOx combustion apparatus, including: a burner for generating a gas containing oxygen, nitrogen oxides, and carbon monoxide by combustion; an endothermic device for absorbing heat from the gas; a catalyst device having a catalyst component for oxidizing carbon monoxide contained in the gas after passing through the endothermic device by oxygen and reducing nitrogen oxides by carbon monoxide; a poisoning substance removing device provided on a primary side of the catalyst device, for removing a poisoning substance containing at least sulfur, which is contained in the gas and adsorbs to the catalyst component or forms a compound with the catalyst component; a sensor for detecting an air ratio of the burner; and an air-ratio adjusting device for controlling an air ratio of the burner to a set air ratio based on a detected signal of the sensor. In this apparatus, the burner and the endothermic device are configured so as to conduct a concentration ratio adjustment of adjusting a concentration ratio K of oxygen, nitrogen oxides, and carbon monoxide in a gas on a primary side of the catalyst device, when the air ratio is adjusted to the set air ratio by the air-ratio adjusting device. Further, the concentration ratio adjustment is either of the following Adjustment 0, Adjustment 1, and Adjustment 2:

Adjustment 0: the concentration ratio K is adjusted to a predetermined reference concentration ratio K0 in which a concentration of nitrogen oxides and a concentration of carbon monoxide on the secondary side of the catalyst device are decreased to substantially zero;

Adjustment 1: the concentration ratio K is adjusted to a first predetermined concentration ratio K1 in which the concentration of nitrogen oxides on the secondary side of the catalyst device is decreased to substantially zero and the concentration of carbon monoxide on the secondary side of the catalyst device is decreased to a predetermined value or less; and

Adjustment 2: the concentration ratio K is adjusted to a second predetermined concentration ratio K2 in which the concentration of carbon monoxide on the secondary side of the catalyst device is decreased to substantially zero and the concentration of nitrogen oxides on the secondary side of the catalyst device is decreased to a predetermined value or less.

In a seventh invention according to the present invention, according to the sixth invention, a formula of determining the predetermined reference concentration ratio K0 is the following formula (1), the predetermined reference concentration ratio K0 satisfies the following formula (2), the first predetermined concentration ratio K1 is smaller than the predetermined reference concentration ratio K0, and the second predetermined concentration ratio K2 is larger than the predetermined reference concentration ratio K0:

$$([NOx] + 2[O_2]) \ / \ [CO] = K \ \dots \ (1)$$

$$1.0 \leq K = K0 \leq 2.0 \ \dots \ (2)$$

where [CO], [NOx], and [O_2] represent concentrations of carbon monoxide, nitrogen oxides, and oxygen, respectively, and satisfying a condition of [O_2] > 0.

According to the sixth or seventh invention, a poisoning substance such as sulfur is removed by the poisoning substance removing device, so the performance of the catalyst device can be ensured for a long period of time. Consequently, the effects of decreasing NOx and the effect of decreasing CO by the catalyst device can continue for a long period of time.

An eighth invention according to the present invention relates to a low NOx combustion apparatus, including: a burner for generating a gas containing oxygen, nitrogen oxides, and carbon monoxide by combustion; an endothermic device for absorbing heat from the gas; a catalyst device having a catalyst component for oxidizing carbon monoxide contained in the gas after passing through the endothermic device by oxygen and reducing nitrogen oxides by carbon monoxide; a poisoning substance removing device provided on a primary side of the catalyst device, for removing a poisoning substance containing at least sulfur, which is contained in the gas and adsorbs to the catalyst component or forms a compound with the catalyst component; a sensor for detecting an air ratio of the burner; and an air-ratio adjusting device for controlling an air ratio of the burner to a set air ratio based on a detected signal of the sensor. In this apparatus, the burner and the endothermic device are configured so that a concentration ratio of the gas on a primary side of the catalyst satisfies the following formula (3), when the air ratio is adjusted to the set air ratio by the air-ratio adjusting device:

$$([NOx] + 2[O_2]) / [CO] \leq 2.0 \ldots (3)$$

where [CO], [NOx], and [$O_2$] represent concentrations of carbon monoxide, nitrogen oxides, and oxygen, respectively, and satisfying a condition of [$O_2$] > 0.

According to the eighth invention, a poisoning substance such as sulfur is removed by the poisoning substance removing device, so the performance of the catalyst device can be ensured for a long period of time. Consequently, the effects of decreasing NOx and the effect of decreasing CO by the catalyst device can continue for a long period of time.

In a ninth invention according to the present invention, according to the fifth to eighth inventions, the poisoning substance removing device and the catalyst device are provided with an interval placed therebetween and to be exchangeable with each other.

According to the ninth invention, in addition to the effects by the fifth to eighth inventions, the poisoning substance removing device and the catalyst device are separately provided so as to be exchanged, so only the poisoning substance removing device can be exchanged. Further, the poisoning substance removing device and the catalyst device are provided with an interval placed therebetween, so the function of the catalyst can be enhanced by a leading effect, and gas is mixed between the poisoning substance removing device and the catalyst device, whereby a gas component can be made uniform.

In the tenth invention according to the present invention, according to the fifth to eighth inventions, a carrier of a component that adsorbs to the poisoning substance of the poisoning substance removing device and a carrier of a catalyst component of the catalyst device are integrally formed so as to be exchangeable.

According to the tenth invention, in addition to the effects by the fifth to eighth inventions, the poisoning substance removing device and the catalyst device are formed integrally, so the handling such as the attachment/detachment with respect to an apparatus can be performed easily.

In an eleventh invention according to the present invention, according to the fifth to eighth inventions, an amount of the catalyst component contained in the poisoning substance removing device is smaller than that of the catalyst device, including zero.

In addition to the effects by the fifth to eighth inventions, the tenth invention can be configured at low cost with the use amount of a catalyst component decreased.

Effects of the Invention

According to the present invention, the decrease in performance of a catalyst device can be prevented.

Brief Description of the Drawings

FIG. 1 is a view for explaining a principle constitution of Embodiment 1 according to the present invention.
FIG. 2 is a longitudinal sectional view of a steam boiler of Embodiment 1 according to the present invention.
FIG. 3 is a sectional view taken along line II to II of FIG. 1.
FIG. 4 is a view showing a constitution of major parts when a catalyst given in FIG. 2 is viewed from a direction in which exhaust gas flows.
FIG. 5 is a pattern diagram for explaining an air ratio control by using characteristics of air ratio-NOx/CO of Embodiment 1 according to the present invention.
FIG. 6 is a partial sectional view of a damper position adjusting device of Embodiment 1 according to the present invention, which is in operation.
FIG. 7 is a sectional view of major parts of the damper position adjusting device.
FIG. 8 is a pattern diagram for explaining characteristics of a burner and endothermic device and those of a catalyst given in Embodiment 1 according to the present invention.
FIG. 9 is a drawing for explaining output characteristics of the sensor given in Embodiment 1 according to the present invention.
FIG. 10 is a drawing for explaining motor controlling characteristics of Embodiment 1 according to the present invention.
FIG. 11 is a drawing for explaining NOx and CO decreasing characteristics of Embodiment 1 according to the present invention.
FIG. 12 is a longitudinal sectional view of a steam boiler of Embodiment 2 according to the present invention.
FIG. 13 is a drawing for explaining motor controlling characteristics of Embodiment 2 according to the present invention.

FIG. 14 is a drawing for explaining an air ratio control by using characteristics of air ratio-NOx/CO of Embodiment 3 according to the present invention.

FIG. 15 is a longitudinal sectional view of a steam boiler of Embodiment 4 according to the present invention.

Description of Reference Symbols

1: burner
3: poisoning substance removing device
4: catalyst (catalyst device)
7: air-ratio adjusting device
8: sensor
9: controller (control device)

Best Mode for carrying out the Invention

An explanation will be made for terms used in the present application before the embodiment modes of the present invention will be explained. "Gas" includes gas, which has completely passed from a burner through a catalyst, and gas, which has passed through the catalyst, is referred to as "exhaust gas." Therefore, the gas includes that in which burning reactions are in progress (combustion process) and that in which the burning reactions are completed, and is also referred to as combustion gas. In this instance, where the catalyst is installed in multiple stages along the gas flow, the "gas" is defined as gas covering that which has completely passed through the catalyst at a final stage, and "exhaust gas" is defined as gas after passing through the catalyst at the final stage. Further, "fuel gas" is defined as inflammable gas before being mixed with combustible air.

Further, a "primary side of the catalyst" is a side where a burner is installed with respect to a catalyst, referring to immediately before the passage of gas through the catalyst unless otherwise specified, whereas a "secondary side of the catalyst" is a side opposite to the primary side of the catalyst. Further, an air ratio m is defined as $m = 21 / (21 - [O_2])$. Note that $[O_2]$ represents the concentration of oxygen in exhaust gas on the secondary side of the catalyst, but $[O_2]$ used in determining an air ratio represents the concentration of excess oxygen in an oxygen excess region and also represents as a negative value the concentration of insufficient oxygen necessary for burning unburned gas such as carbon monoxide at the air ratio of $m = 1$ in a fuel excess region. Further, "free of hydrocarbons" does not mean that hydrocarbons will not be generated at all in a process of burning reactions, but means that hydrocarbons are generated to some extent during the process of burning reactions but hydrocarbons, which reduce nitrogen oxides are not substantially contained (a measurement limit or lower) in gas flowing into the catalyst at a stage where the burning reactions are completed.

Further, "catalyst degradation" or "degradation of a catalyst function" means that a poisoning substance adsorbs to or chemically reacts with a catalyst component that functions as a catalyst to inhibit the function of a catalyst.

Next, an explanation will be made for embodiment modes of the present invention. The present invention is applicable to a water-tube boiler such as a small through-flow boiler, a hot-water supply system, and a combustion apparatus (also referred to as thermal component or combustion device) used in a regenerator for an absorption refrigerator.

(Embodiment Mode 1)

Embodiment Mode 1 of the present invention is a catalyst degradation preventing apparatus of a catalyst device containing a catalyst component that comes into contact with gas to change it chemically. In the apparatus, a poisoning substance removing device that removes a poisoning substance that is contained in the gas and adsorbs to the catalyst component or forms a compound with the catalyst component is provided on a primary side of the catalyst device. The "catalyst device" can be called a "catalyst", "catalyst main body", and "catalyst body".

Embodiment Mode 1 is preferably carried out in a combustion apparatus, but without being limited thereto, Embodiment Mode 1 can also be carried out in an exhaust gas treating apparatus such as a gas turbine.

In Embodiment Mode 1, first, gas comes into contact with the poisoning substance removing device, and a poisoning substance contained in the gas is removed by adsorbing to the poisoning substance removing device or forming a compound with the poisoning substance removing device. The adsorption includes physical adsorption and chemical adsorption. Due to the removal function, a poisoning substance is not contained in the gas flowing to the catalyst device, and the poisoning substance does not adsorb to the catalyst component, whereby the degradation in a catalyst function is prevented. As a result, the catalyst device exhibits intended catalyst performance (initial performance) without being influenced by the poisoning substance.

The poisoning substance removing device contains a poisoning substance removing component that adsorbs to a poisoning substance or reacts with the poisoning substance, and when the adsorption or the reaction by the poisoning substance removing component is put in a saturation state (state in which the adsorption and reaction is not performed any more), the poisoning substance contained in gas comes to be adsorbed to a catalyst component of the catalyst device, with the result that catalyst performance is decreased. When the performance decrease ratio exceeds a predetermined value, the maintenance of the poisoning substance removing device and the catalyst device, i.e., the exchange or performance recovery processing is performed.

(Embodiment Mode 2)

Embodiment Mode 1 is carried out as the following Embodiment Mode 2 of a low NOx combustion apparatus. The low NOx combustion apparatus of Embodiment Mode 2 includes a burner for generating gas containing oxygen, nitrogen oxides, and carbon monoxide and free of hydrocarbon by combustion of a hydrocarbon-containing fuel, an endothermic device for absorbing heat from the gas, a catalyst device having a catalyst component for oxidizing carbon monoxide contained in the gas after passing through the endothermic device and reducing nitrogen oxides by carbon monoxide, a poisoning substance removing device provided on a primary side of the catalyst device, for removing a poisoning substance containing at least sulfur, which is contained in the gas and adsorbs to the catalyst component or forms a compound with the catalyst component, a sensor for detecting an air ratio of the burner, and an air-ratio adjusting device for controlling an air ratio of the burner to a set air ratio based on a detected signal of the sensor. Further, the burner and the endothermic device are configured so as to adjust the concentration ratio of oxygen, nitrogen oxides, and carbon monoxide in gas on a primary side of the catalyst device to a predetermined concentration ratio at which the concentration of nitrogen oxides on a secondary side of the catalyst device is decreased to substantially zero or a predetermined value or less, and the concentration of carbon monoxide on the secondary side of the catalyst device is decreased to substantially zero or a predetermined value or less, when the air ratio is adjusted to the set air ratio by the air-ratio adjusting device.

The set air ratio is preferably controlled to be a set air ratio of 1.0 to 1.1, and more preferably 1.0 to 1.0005. The set air ratio is preferably obtained by an air/fuel ratio on a secondary side of the catalyst device, but the air ratio can also be controlled so that the concentration of oxygen on the primary side of the catalyst becomes a predetermined concentration at which a set air ratio of 1.0 to 1.0005 can be satisfied as a result of the reaction in the catalyst device. In the Description of the present application, an air ratio of 1.0 to 1.0005 and an air ratio close thereto are referred to as low air ratio. The upper limit value "1.0005" is obtained when the measurement limit of the concentration of oxygen on the secondary side by the oxygen concentration measurement apparatus is $O_2$: 0.01%. Further, the above phrase "when the set air ratio is adjusted by the air-ratio adjusting device, a concentration ratio of oxygen, nitrogen oxides, and carbon monoxide on a primary side of the catalyst at which the concentration of nitrogen oxides on the secondary side of the catalyst is set to be substantially zero can be obtained" is desirably satisfied over an entire range of the set air ratio, but is not necessarily satisfied over the entire range.

In Embodiment Mode 2 of the present invention, the burner conducts combustion while being controlled to the set air ratio by the air-ratio adjusting device. Gas generated by combustion contains oxygen, nitrogen oxides, and carbon monoxide, and a poisoning substance that reacts with and being adsorbed to the catalyst component. The gas does not contain hydrocarbon. The poisoning substance contains a sulfur component present in gas as a sulfur oxide (SOx) and an iron component present in the gas as iron oxide fine particles. The sulfur component is mainly sulfur oxide contained in combustible air, and contains an odorant if the odorant (tetrahydrothiophene, t-butylmercaptane, etc.) is contained in gas fuel and the odorant is not removed. The iron component is contained in gas as rust in the case where the endothermic device and the gas duct are made of iron.

After the gas is subjected to an endothermic function by the endothermic device, first, a poisoning substance is removed by adsorption or reaction by the poisoning substance removing device, and gas free of the poisoning substance flows to the catalyst device. Then, in the catalyst device, gas and a catalyst component come into contact with each other, whereby carbon monoxide is oxidized and nitrogen oxides are reduced. As a result, the emission amount of nitrogen oxides in the gas is decreased to substantially zero or a predetermined value or less. Further, the emission amount of carbon monoxide is decreased to substantially zero or a predetermined value or less.

In this instance, the concentration of nitrogen oxides decreased to substantially zero is preferably 5 ppm, more preferably 3 ppm, and still more preferably zero. The concentration of carbon monoxide decreased to substantially zero is preferably 30 ppm and more preferably 10 ppm. Further, in the following description, the concentration of oxygen decreased to substantially zero is 100 ppm or less and preferably below a measurement limit value. Stillfurther, the concentration of nitrogen oxides and that of carbon monoxide equal to or lower than a predetermined value mean a value equal to or below the standard for concentrations of emissions stipulated in various territories and countries.

However, as matter of course, it is preferable to set the value to substantially zero. That is, "predetermined value" may be referred to as "permissible value" or "emission standard value."

Then, when the passing gas amount to the poisoning substance removing device exceeds a predetermined amount, and the adsorption or reaction of the poisoning substance is put in a saturated state, the poisoning substance leaks to gas flowing from the poisoning substance removing device, and the catalyst function of the catalyst device decreases. When the concentration of nitrogen oxides on the secondary side of the catalyst device cannot be decreased to zero any more, the poisoning substance removing device is exchanged. Further, the catalyst device is exchanged, if required performance is not satisfied.

According to Embodiment Mode 2 of the present invention, since the poisoning substance removing device is provided, the initial performance of the catalyst device can be maintained until the absorption or reaction by the poisoning substance removing device is put in a saturated state.

In Embodiment Mode 2, a concentration ratio of oxygen, nitrogen oxides, and carbon monoxide on a primary side of the catalyst device at which the concentration of nitrogen oxides on a secondary side of the catalyst device is decreased to substantially zero can be obtained by controlling the air-ratio adjusting device to the set air ratio. In the low air ratio control, stable control of an air ratio is difficult. However, stable control of an air ratio can be performed by including an electric control device and/or mechanical control device for controlling the air ratio stably in the air-ratio adjusting device.

The concentration ratio on the primary side of the catalyst device is preferably controlled so that the concentration of carbon monoxide in the gas on the primary side of the catalyst device becomes substantially equal to or more than a value obtained by adding the concentration of carbon monoxide consumed in the catalyst device by oxidation (first reaction) of carbon monoxide to the concentration of carbon monoxide consumed in the catalyst device by reduction (second reaction) by carbon monoxide of nitrogen oxides.

(Embodiment Mode 3)

Embodiment Mode 2 can be expressed by the following Embodiment Mode 3. The low NOx combustion apparatus of Embodiment Mode 3 includes a burner for generating gas containing oxygen, nitrogen oxides, and carbon monoxide and free of hydrocarbon by combustion of hydrocarbon-containing fuel, an endothermic device for absorbing heat from the gas, a catalyst device having a catalyst component for oxidizing carbon monoxide contained in the gas after passing through the endothermic device and reducing nitrogen oxides by carbon monoxide, a poisoning substance removing device provided on a primary side of the catalyst device, for removing a poisoning substance containing at least sulfur, which is contained in the gas and adsorbs to the catalyst component or forms a compound with the catalyst component, a sensor for detecting an air ratio of the burner, and an air-ratio adjusting device for controlling an air ratio of the burner to a set air ratio based on a detected signal of the sensor. Further, the burner and the endothermic device are configured so as to conduct a concentration ratio adjustment of adjusting a concentration ratio K of oxygen, nitrogen oxides, and carbon monoxide in gas on a primary side of the catalyst device, when the air ratio is adjusted to the set air ratio by the air-ratio adjusting device. The concentration ratio adjustment is either of the following Adjustment 0, Adjustment 1, and Adjustment 2.

Adjustment 0: the concentration ratio K is adjusted to a predetermined reference concentration ratio K0 in which a concentration of nitrogen oxides and a concentration of carbon monoxide on the secondary side of the catalyst device are decreased to substantially zero.

Adjustment 1: the concentration ratio K is adjusted to a first predetermined concentration ratio K1 in which the concentration of nitrogen oxides on the secondary side of the catalyst device is decreased to substantially zero and the concentration of carbon monoxide on the secondary side of the catalyst device is decreased to a predetermined value or less.

Adjustment 2: the concentration ratio K is adjusted to a second predetermined concentration ratio K2 in which the concentration of carbon monoxide on the secondary side of the catalyst device is decreased to substantially zero and the concentration of nitrogen oxides on the secondary side of the catalyst device is decreased to a predetermined value or less.

Then, the catalyst is **characterized in that** it decreases each of the concentration of nitrogen oxides and that of carbon monoxide on the secondary side of the catalyst to substantially zero when Adjustment 0 is made, decreases the concentration of nitrogen oxides and that of carbon monoxide on the secondary side of the catalyst to substantially zero and a predetermined value or less, respectively, when Adjustment 1 is made, and decreases the concentration of carbon monoxide and that of nitrogen oxides on the secondary side of the catalyst to substantially zero and a predetermined value or less, respectively, when Adjustment 2 is made.

In Embodiment Mode 3, the concentration ratio means a mutual relationship between the concentration of carbon monoxide, that of nitrogen oxides, and that of oxygen. A predetermined reference concentration ratio K0 of Adjustment 0 is determined by the following determination formula (1), and preferably set in such a manner that it satisfies the following formula (2), the first predetermined concentration ratio K1 is made smaller than the predetermined reference concentration ratio, and that the second predetermined concentration ratio K2 is made larger than the predetermined reference concentration ratio.

$$([NOx] + 2[O_2]) \ / \ [CO] = K \cdots (1)$$

$$1.0 \leq K = K0 \leq 2.0 \qquad \cdots (2)$$

where [CO], [NOx], and [O$_2$] represent concentrations of carbon monoxide, nitrogen oxides, and oxygen, respectively, and satisfying the condition of [O$_2$] > 0.

The predetermined reference concentration ratio K0 is a concentration ratio of oxygen, nitrogen oxides, and carbon monoxide on the primary side of the catalyst device in which the concentration of oxygen, that of nitrogen oxides, and that of carbon monoxide on the secondary side of the catalyst device are each decreased to substantially zero. Formula (1) is a determination formula to determine the predetermined reference concentration ratio K0, and formula (2) indicates conditions for decreasing the concentration of oxygen, that of nitrogen oxides, and that of carbon monoxide on the secondary side of the catalyst device to substantially zero. Theoretically, each of these concentrations can be decreased to zero under the condition of K0 = 1. 0. However, experimental results have confirmed that each of the concentrations can be decreased to substantially zero within a scope of formula (2) and an upper limit of the K0, 2.0, may be a value greater than 2.0, depending on characteristics of the catalyst.

When a concentration ratio K on the primary side of the catalyst device is adjusted so that it is lower than the predetermined reference concentration ratio K0, in other words, K in formula (1) is given as the first predetermined concentration ratio K1 which is smaller than K0 (Adjustment 1), the concentration of oxygen and that of nitrogen oxides on the secondary side of the catalyst device are decreased to substantially zero and the concentration of carbon monoxide on the secondary side of the catalyst device is decreased to a predetermined value or less. The predetermined value of the concentration of carbon monoxide is preferably set to be an emission standard value or less (since this value is different depending on countries, it may be changed in each of the countries). Upon determination of the predetermined value, it is possible to determine experimentally the first predetermined concentration ratio K1. Specifically, such adjustment of the concentration ratio K that a value of the concentration ratio K is given as the first predetermined concentration ratio K1, which is smaller than K0, can be made by making smaller a ratio of the concentration of oxygen to that of carbon monoxide on the primary side of the catalyst than a ratio of the concentration of oxygen to that of carbon monoxide, which satisfies the predetermined reference concentration ratio K0.

Further, a concentration ratio K on the primary side of the catalyst device is adjusted in such a manner that the concentration ratio K will be the second predetermined concentration ratio K2, which is greater than K0, (Adjustment 2), whereby the concentration of carbonmonoxide on the secondary side of the catalyst is decreased to substantially zero and that of nitrogen oxides on the secondary side of the catalyst is decreased to a value equal to or lower than a predetermined value. In this instance, the concentration of oxygen on the secondary side of the catalyst device will be a predetermined concentration. A predetermined value of the concentration of nitrogen oxides is different from the predetermined value of the concentration of carbon monoxide and preferably lower than an emission standard value determined in various countries. Upon determination of the predetermined value, it is possible to determine experimentally the second concentration ratio K2. More specifically, such adjustment of the concentration ratio K to give the second predetermined concentration ratio K2 can be made by making the ratio of the concentration of oxygen to that of carbon monoxide on the primary side of the catalyst device greater than a ratio of the concentration of oxygen to that of carbon monoxide, which satisfies the predetermined reference concentration ratio K0.

Embodiment Mode 3 preferably has a concentration ratio constant-control step of keeping constant the concentration ratio K at each of the predetermined concentration ratios K0, K1 and K2.

In Embodiment Mode 3, a poisoning substance is removed by the poisoning substance removing device in the same manner as in Embodiment Mode 1. Further, combustion is conducted in the burner to generate gas free of hydrocarbons but containing oxygen, nitrogen oxides, and carbon monoxide. Then, a concentration ratio K of oxygen, nitrogen oxides and carbon monoxide in the gas on the primary side of the catalyst is adjusted to the predetermined reference concentration ratio K0, the first predetermined concentration ratio K1, or the second predetermined concentration ratio K2 by the adjustment of the concentration ratio, according to any one of Adjustment 0, Adjustment 1, and Adjustment 2. Then, the gas is in contact with the catalyst, by which carbon monoxide is oxidized by oxygen in the gas and nitrogen oxides are reduced by carbon monoxide. Where Adjustment 0 or Adjustment 1 is made, a role of oxygen in a hazardous-substance decreasing action is to adjust the concentration of carbon monoxide, in other words, consuming and decreasing carbon monoxide, which is excessively available in reduction of nitrogen oxides to decrease the concentration thereof to substantially zero. According to the hazardous-substance decreasing action after Adjustment 0 or Adjustment 1, the amount of emitted nitrogen oxides in the gas is decreased to substantially zero, and the amount of emitted carbon monoxide is decreased to substantially zero or a value equal to or lower than a predetermined value. Further, according to the hazardous-substance decreasing action after Adjustment 2, the amount of emitted carbon monoxide in the gas is decreased to substantially zero and the concentration of nitrogen oxides is also decreased to a value equal to or lower than a predetermined value. Still further, according to the concentration ratio constant-control, a change is suppressed in each of the predetermined concentration ratios K0, K1, and K2, thus making it possible to secure the effects of decreasing amounts of exhausted nitrogen oxides and carbon monoxide. In particular, in Adjustment 0, the concentration ratio constant-control is important in decreasing the amount of emitted nitrogen oxides to substantially zero.

A predetermined reference concentration ratio K0 of Adjustment 0 and a first predetermined concentration ratio K1 of Adjustment 1 can be collectively expressed by the following formula (3). In otherwords, when formula (3) is satisfied, the concentration of nitrogen oxides on the secondary side of the catalyst is decreased to substantially zero, and the concentration of carbon monoxide is decreased to substantially zero, otherwise the concentration of carbon monoxide is decreased to substantially zero, otherwise the concentration of carbon monoxide is decreased. In order to decrease the concentration of carbon monoxide to a value equal to or lower than the predetermined value, the concentration ratio K on the primary side of the catalyst device is adjusted so that the concentration ratio K will be a value smaller than K0, thereby obtaining the first predetermined concentration ratio K1.

$$([NOx] + 2[O_2]) / [CO] = K \leq 2.0 \cdots (3)$$

where [CO] [NOx], and [$O_2$] represent concentrations of carbon monoxide, nitrogen oxides, and oxygen, respectively, and satisfying the condition of [$O_2$] > 0.

An explanation will be further made for actions of decreasing hazardous substances by the catalyst device. The decreasing actions may be conducted in the following procedures. The catalyst device undergoes a first reaction for oxidizing carbon monoxide and a second reaction for reducing nitrogen oxides by carbon monoxide as main reactions. Then, in reactions of the catalyst device (catalyst reactions), the first reaction is predominant over the second reaction in the presence of oxygen. Thus, carbon monoxide is consumed by oxygen on the basis of the first reaction and adjusted for the concentration and nitrogen oxides are thereafter reduced by the second reaction. This is a simplified explanation. In reality, the first reaction is competitive with the second reaction. However, since the reaction of carbon monoxide with oxygen takes place apparently faster than the second reaction in the presence of oxygen, it is considered that carbon monoxide is oxidized at a first stage (first reaction) and nitrogen oxides are reduced at a second stage (second reaction).

Briefly, in the catalyst device, oxygen is consumed by the first reaction of $CO + 1/2O_2 \rightarrow CO_2$, in the presence of oxygen, and remaining CO is used to reduce nitrogen oxides by the second reaction of $2CO + 2NO \rightarrow N_2 + 2CO_2$, thereby decreasing the concentration of emitted nitrogen oxides.

In this case, [NOx] in formula (2) is a total of the concentration of nitric monoxide [NO] and that of nitric dioxide, [$NO_2$]. In the above explanation on the reaction formulae, NO is used in place of NOx to make a similar explanation, because nitrogen oxides generated at high temperatures are constituted mainly with NO, with only a few percentages taken up by $NO_2$. $NO_2$, if present, is considered to be reduced by CO in a similar manner as NO.

[0065]    Where the concentration ratio K is 1.0, it is theoretically possible to decrease to zero the concentrations of oxygen, nitrogen oxides, and carbon monoxide emitted from the catalyst. However, carbon monoxide is experimentally found to be emitted in a slight amount. Then, a formula of ([NOx] + 2[$O_2$]) / [CO] = 1 has been theoretically derived from the first reaction and the second reaction, with the experimental results taken into account.

In this case, an explanation will be made for how to derive the formula of ([NOx] + 2[$O_2$]) / [CO] = 1. Since the formula satisfies typically the predetermined reference concentration ratio K0, it is referred to as predetermined reference concentration satisfying formula. It is known that the first reaction (I) takes place as a main reaction inside the catalyst device.

$$CO + 1/2O_2 \rightarrow CO_2 \cdots (I)$$

Further, inside the catalyst device in which a precious metal catalyst such as Pt is used, NO reduction reaction due to CO resulting from the second reaction (II) will proceed in oxygen-absent atmospheres.

$$CO + NO \rightarrow CO_2 + 1/2N_2 \cdots (II)$$

Therefore, with attention given to the concentration of a substance contributing to the first reaction (I) and the second reaction (II), the above reference concentration satisfying formula has been derived.

Specifically, when the concentration of CO, that of NO, and that of $O_2$ are given as [CO] ppm, [NO] ppm, and [$O_2$] ppm, respectively, the concentration of oxygen, which can be removed by CO on the basis of formula (I), is expressed by the following formula (III).

$$2[O_2] = [CO]a \cdots (III)$$

Further, in order to have a reaction expressed by formula (II), CO is needed in an amount equal to that of NO, thus establishing a relationship expressed by the following formula (IV).

$$[CO]b = [NO] \cdots (IV)$$

where the reactions expressed by formulae (I) and (II) are allowed to occur continuously inside the catalyst device, a concentration relationship expressed by the following formula (V) is needed, which can be obtained by combining formula (III) with formula (IV).

$$[CO]a + [CO]b = 2[O_2] + [NO] \cdots (V)$$

Since [CO]a + [CO]b are the same component, they can be expressed as [CO] in terms of the concentration of CO in gas on the secondary side of the catalyst device.

Thus, the predetermined reference concentration ratio satisfying formula, that is, a relationship expressed by [CO] = 0.2 [$O_2$] + [NO] can be obtained.

Where the concentration ratio K is smaller than 1.0, the concentration of carbon monoxide is available in excess in reducing the nitrogen oxides. Therefore, the concentration of emitted oxygen is decreased to zero and carbon monoxide remains in gas after passing through the catalyst.

Further, the concentration ratio K of 2.0, which exceeds 1.0, may be due to the following reasons, although the value has been obtained experimentally. Reactions taking place in the catalyst device are not completely elucidated, and there may be possibilities that auxiliary reactions may take place, in addition to the main reactions of the first and the second reactions. One of the auxiliary reactions may be that in which steam reacts with carbon monoxide to produce hydrogen, which may result in a reduction of nitrogen oxides and oxygen, and thus, the concentration ratio K exceeds 1.0.

Next, the constituents of the Embodiment Modes 1 to 3 according to the present invention are further described. The burner is preferably a primary aerated-type premixed burner at which gas fuel is previously mixed and burned. In order to effectively conduct the first reaction and the second reaction in the catalyst device, it is important to adjust the concentration ratio, which is shown in formulae (2) and (3) on oxygen, nitrogen oxides, and carbon monoxide. A premixed burner is used as the burner, thereby making it possible to relatively easily obtain the predetermined reference concentration ratio K0 in a low air ratio region. However, oxygen, nitrogen oxides, and carbon monoxide in gas on the primary side of the catalyst device are uniformly mixed and when the control so as to obtain the individual concentrations as the predetermined concentration ratios is possible, a partially premixed burner or a previously-mixed burner other than a premixed burner can be used.

Further, the burner is assumed to be able to burn a hydrocarbon-containing fuel at a low air ratio so that the concentration of oxygen of gas before flowing into the catalyst device (on a primary side of the catalyst device) is 0% < $O_2 \le 1.00\%$ When the concentration of oxygen is substituted into an operation expression ($m = 21/(21 - O_2)$) of an air ratio, the result is 1.0 to 1.05. In the case where the concentration of oxygen on the primary side of the catalyst device under a condition satisfying formulae (2) and (3) is 0% < $O_2 \le 1.00\%$, the concentration of oxygen on the secondary side of the catalyst device is substantially 0%, and the air ratio is substantially 1. Consequently, an energy-saving combustion apparatus with low pollution can be provided, in which energy saving is expressed in addition to low NOx and low CO whose emission concentration is close to zero.

Further, the endothermic device is used as a water tube group constituting a storage water heater body in the case where the combustion apparatus is a boiler, and absorbing liquid concentration tubes in the case where the combustion apparatus is a reproducer. The embodiment of the endothermic device includes a first aspect (corresponding to Patent Documents 1 to 4) in which a little combustion space is provided immediately close to the burner and a water tube group is arranged inside the combustion space and a second aspect having the combustion space between the burner and the water tube group. In the first aspect, burning reactions are in progress at a clearance between the water tube groups. The water tube group is a plurality of water tubes for exchanging heat with gas resulting from the burner. Such a constitution is also available that one water tube is meandered to form a plurality of water tubes as with water tubes used in a water heater.

The endothermic device is able to absorb heat from gas generated by the burner to utilize the heat, controlling the temperature of the gas to a temperature close to that of activating the catalyst device and also suppressing it to a temperature lower than that of preventing thermal deterioration, in other words, imparting to the temperature of the gas functions to allow the first and the second reactions to take place effectively and prevent thermal deterioration, with the durability taken into account. Further, the endothermic device is allowed to function as means for preventing the gas temperature from elevating to 900°C or higher, thus stopping the oxidation of carbon monoxide, and keeping unchanged a concentration ratio in gas from the burner.

The concentration ratio adjustment by the burner and the concentration ratio adjustment by the endothermic device are performed by obtaining the characteristics air ratio-NOx/CO based on experimental data. The concentration ratio adjustment controls the concentration ratio K of oxygen, nitrogen oxides, and carbon monoxide on a primary side of the catalyst to the predetermined concentration ratio using the air-ratio adjusting device for adjusting the ratio between the combustion amount of the burner and the combustible air amount based on the concentration ratio characteristics of the burner and the endothermic device. Thus, the concentration of nitrogen oxides on a secondary side of the catalyst device is adjusted to substantially zero and a predetermined value or less and the concentration of carbonmonoxide on the secondary side of the catalyst device is adjusted to substantially zero and a predetermined value or less. Then, the concentration ratio adjustment adjusts the concentration ratio K on the primary side of the catalyst device to the predetermined reference concentration ratio K0, the first predetermined concentration ratio K1, and the second predetermined concentration ratio K2. The adjustment can be conducted by using the following first and second concentration ratio adjusting devices. The first and second concentration ratio adjusting devices preferably adjust the concentration ratio by the air-ratio adjusting device of adjusting the ratio between the combustion amount of the burner and the combustible air amount.

The first concentration ratio adjusting device adjusts the concentration ratio K by utilizing the characteristics of the burner and also by utilizing the characteristics of the endothermic device placed between the burner and the catalyst device to absorb heat from the gas, that is, utilizing the concentration ratio characteristics of the burner and the endothermic device. The concentration ratio characteristics are such characteristics that the concentration of carbon monoxide and that of nitrogen oxides are changed after complete or partial passage through the endothermic device, carbon monoxide and nitrogen oxides being generated by combustion in the burner by allowing an air ratio to change. Further, the concentration ratio characteristics are in principle determined by the concentration ratio characteristics of the burner, and the endothermic device is typically provided with functions to partially change the concentration ratio characteristics of the burner or retaining the concentration ratio characteristics. Where the endothermic device is given as the first aspect, gas during burning reactions is cooled to increase the concentration of carbon monoxide and also to suppress the concentration of nitrogen oxides. Where the endothermic device is given as the second aspect, the concentration ratio characteristics by the burner are typically retained, with most of the characteristics kept as they are.

Where the first concentration ratio adjusting device is used to adjust the concentration ratio K, no concentration ratio adjusting device is needed other than the burner or the endothermic device, thereby making an apparatus simple in constitution.

Further, the endothermic device is used to suppress temperatures of the gas, thereby providing the effects of improving the durability of the catalyst device.

In the second concentration ratio adjusting device, the concentration ratio K is adjusted by utilizing the concentration ratio characteristics of the burner and endothermic device placed between the burner and the catalyst device to absorb heat from the gas and by using the auxiliary adjusting device placed between the burner and the catalyst device.

The auxiliary adjusting device is placed between the burner and the catalyst device (including a part of the endothermic device) and provided with auxiliary functions to make the above adjustment by feeding carbon monoxide or adsorbing and removing oxygen, thereby increasing a concentration ratio of carbon monoxide to oxygen. The auxiliary adjusting device includes a CO generator and an auxiliary burner capable of adjusting an amount of oxygen or CO in exhaust gas.

Where the second concentration ratio adjusting device is used to adjust the concentration ratio, the concentration ratio is adjusted by using the auxiliary adjusting device, in addition to the concentration ratio characteristics of the burner and the endothermic device. Therefore, the burner and the endothermic device are not limited to a specially structured burner but applicable to a wider application.

The concentration ratio adjustment by the concentration ratio adjusting device can be expressed as an adjustment of adjusting the concentration of carbon monoxide in the gas on a primary side of the catalyst to substantially equal to or more than a value obtained by adding the concentration of carbon monoxide decreased in the catalyst device by oxidation of carbon monoxide to the concentration of carbon monoxide decreased in the catalyst device by reduction of nitrogen oxides by carbon monoxide. In the case where the concentration ratio adjustment is impossible, the concentration ratio adjustment by the concentration ratio adjusting device can be configured so as to perform the adjustment by the injection of carbon monoxide and the injection of oxygen.

In the concentration ratio, it is preferred that the air ratio is controlled to a low air ratio of substantially 1.0, because energy saving can be achieved. Further, the concentration ratio adjustment is performed preferably by suppressing the amount of nitrogen oxides and the amount of carbon monoxide to a predetermined amount or lower by adjusting a combustion temperature, and by preventing the obtained concentration of carbon monoxide from being decreased by maintaining the gas temperature. Carbon monoxide is likely to be oxidized at a gas temperature of about 900°C or higher. Therefore, the burner and the endothermic device are constituted preferably so that the gas temperature on a primary side of the catalyst device is kept at 600°C or lower.

The catalyst device has a function of reducing effectively the nitrogen oxides in a state that no hydrocarbons are contained in the gas. The catalyst device is installed downstream from the endothermic device or on its way to the endothermic device and structured so as to apply a catalyst activating substance as a catalyst component to a breathable matrix. The matrix includes metals such as stainless steel and ceramics to which surface treatment is given so as to widen the area which is in contact with exhaust gas. In general, the catalyst activating substance includes platinum and may include precious metals such as Ag, Au, Rh, Ru, Pt, and Pd, a typical example of which is platinum, or metal oxides depending on the practical use. Where the catalyst device is installed on its way to the endothermic device, it is installed on a clearance between endothermic device such as a plurality of water tubes. Such a structure is also available that the endothermic device is used as a matrix to hold a catalyst activating substance on the surface thereof.

The poisoning substance removing device has a configuration in which a poisoning substance removing component for removing a poisoning substance that is adsorbed to the catalyst component is applied to a breathable matrix. That is, a function of removing a poisoning substance only needs to be provided on an upstream side of the catalyst device, so the poisoning substance removing device can have the same configuration as that of the catalyst device, and the catalyst component is generally expensive. Thus, preferably, the poisoning substance removing device is not allowed to contain the catalyst component, or the amount of the catalyst component is set to be smaller than that of the catalyst device even in the case where the catalyst component is contained in the poisoning substance removing device. That is, the concentration of the catalyst component of the poisoning substance removing device is set to be lower than that of the catalyst device (including the case where the concentration of the catalyst component is decreased to zero).

As the poisoning substance removing component, $CeO_2$ (ceria) that is a known substance or the like can be used. In the case of $CeO_2$, it is conceivable that $CeO_2$ reacts with a sulfur component in gas to become $Ce_2(SO_4)_3$.

Further, an interval is provided between the poisoning substance removing device and the catalyst device, and they are exchangeable with each other. Thus, the poisoning substance removing device and the catalyst device are separately configured, and provided so as to be exchangeable, whereby only the poisoning substance removing device can be exchanged. Further, a leading edge that comes into contact with gas is present in the catalyst device, so the function of a catalyst can be enhanced by a so-called leading effect. The poisoning substance removing device and the catalyst device can be provided so as to be divided in a plurality of portions along a flow direction of gas. Thus, the performance can be enhanced by leading effects of each the poisoning substance removing device and the catalyst device.

Further, the poisoning substance removing device and the catalyst device can be provided integrally. In this case, a carrier of a component that adsorbs a poisoning substance of the poisoning substance removing device and a carrier of a catalyst component of the catalyst device are integrally formed continuously so as to be exchangeable. Further, both the carriers can be provided separately and brought into contact with each other without an interval, and formed integrally by a connecting device. Thus, the poisoning substance removing device and the catalyst device are formed integrally, whereby handling such as the attachment/detachment to an apparatus such as a boiler becomes easy. Further, in the case where the poisoning substance removing device and the catalyst device are provided integrally, and the concentration of the catalyst component of the poisoning substance removing device is set to be lower than that of the catalyst device, the poisoning substance removing device can be recycled simultaneously with the catalyst device.

The air-ratio adjusting device preferably includes a flow rate adjusting device, a motor for driving the flow rate adjusting device, and a control device for controlling the motor. The flow rate adjusting device is means for changing either or both of an amount of combustible air and an amount of fuel in the burner to change a ratio of air to fuel, thereby adjusting the air ratio in the burner. Where the flow rate adjusting device is a device for adjusting the amount of combustible air, it is preferably a damper (including the meaning of a valve). The damper includes a structure such as a rotational type in which a valve body rotating at the center of a rotating shaft is used to change an aperture of a flow channel or a slide type which slides on a cross-section opening of a flow channel to change an aperture of the flow channel.

Where the flow rate adjusting device is a device for changing an amount of combustible air, it is preferably installed on an air flow channel between a blower and a fuel supply device. It may be also installed on a suction opening side of the blower such as a suction opening of the blower.

The motor is preferably means for driving the flow rate adjusting device and shall be a motor capable of controlling an aperture extent of the flow rate adjusting device depending on a driving amount and also adjusting a driving amount per unit time. The motor partially constitutes "mechanical control device" for attaining a stable control of the air ratio. "Capable of controlling an aperture extent depending on a driving amount" means that an aperture of the flow rate adjusting valve can be controlled so as to halt at a specific position by determining the driving amount. Further, "capable of adjusting a driving amount per unit time" means that position control can be adjusted for responsiveness.

The motor is preferably a stepping motor (also referred to as step motor) and also includes a gear motor (also referred to as geared motor) and a servo motor. Where the stepping motor is used, the driving amount is decided by applied driving pulse, and an aperture position of the flow rate adj usting device is subjected to opening and closing movement only by an extent depending on the number of driving pulses from a reference aperture position to give any object, by which a halt position can be controlled. Further, where the gear motor or the servo motor is used, the driving amount is determined by opening/closing driving time, an aperture position of the flow rate adjusting device is subjected to opening and closing movement only by an extent depending on the opening/closing driving time from a reference aperture position to give any object, by which a halt position is controlled.

The sensormaybe any sensor that is capable of detecting an air ratio of the burner. Where an air ratio is controlled with an air ratio 1 interposed (before and after the air ratio 1) on the secondary side of the catalyst device using the sensor, the air ratio in a region in which the air ratio is smaller than 1 cannot be calculated by the oxygen concentration sensor, so an air/fuel ratio is obtained using an air-fuel ratio sensor. As the air-fuel ratio sensor, a well-known sensor having the following function can be used. That is, in a region in which an air ratio is 1 or more, the concentration of oxygen is detected, and the detected value corresponding to an air/fuel ratio is output as a current or a voltage. In the region in which an air ratio is 1 or less, oxygen is not present, so the concentration of carbon monoxide is detected and the detected value corresponding to an air/fuel ratio is output as a current or a voltage. Then, the motor can be controlled based on the detected value, i.e., the air/fuel ratio.

Further, where the air ratio on the secondary side of the catalyst device is controlled in a range more than 1 (not controlling with the air ratio of 1 interposed) , the concentration of oxygen is detected with an oxygen concentration sensor instead of the air-fuel ratio sensor, and an air ratio can be calculated from the value. Then, the motor can be controlled based on the air ratio.

Further, as the sensor, a combination of an oxygen concentration sensor and a carbon monoxide concentration sensor can be used. In addition, as the sensor, a sensor capable of controlling an air ratio with an air ratio of 1 interposed on the secondary side of the catalyst device, in place of the air/fuel ratio at which the concentration of oxygen and the concentration of carbon monoxide are detected, can be used. The sensor is preferably installed on the secondary side of the catalyst device but shall not be limited thereto. Where an exhaust heat recovery system is installed on the primary side of the catalyst or the downstream side of the catalyst device, the sensor may be installed on the downstream side.

In the control device, a detected value of the sensor is input, and the control device feeds back and controls a driving amount of the motor on the basis of a previously-stored air ratio control program, in such a manner that the concentration of carbon monoxide in the gas on the primary side of the catalyst device is approximately equal to or above a value obtained by adding the concentration of carbon monoxide consumed inside the catalyst device by the oxidation to the concentration of carbon monoxide consumed inside the catalyst device by the reduction, or that the air ratio is set to a set air ratio of 1.0 to 1.0005 so that formula (3) is satisfied.

The air ratio control program is preferably constituted with a first control zone for changing a driving amount of the motor per unit time (which can be expressed by time per driving unit) depending on a difference between the detected air ratio and the set air ratio and a second control zone for giving the driving amount per unit time as a fixed set value outside the first control zone, thereby controlling a driving amount of the motor. The above control constitutes the electrical control device by which the detected air ratio is kept within a set range on the basis of the set air ratio. In addition, the air ratio control program is not limited to the above-mentioned control but may include various types of PID control.

A control amount at the first control zone can be controlled by referring to a formula of the product of the detected air ratio, the set air ratio, and a set gain. Therefore, the detected air ratio can be smoothly controlled to the set air ratio, and such control that is less frequent in overshoot or hunting can also be attained effectively.

Further, the control device can be configured so as to carry out a maintenance program in addition to the air ratio control program. The maintenance program is configured so as to notify that the adsorption of a poisoning substance of the poisoning substance removing device is put in a saturated state by a notifying device. The notification period can be set based on the adsorption of the poisoning substance removing device, or a period from a time of the start of reaction to a time when the adsorption or reaction is put in a saturated state. According to such a configuration, the capacity of the poisoning substance removing device is changed, whereby a period in which intended performance of the catalyst device is exhibited can be set arbitrarily.

In Embodiment Modes 1 to 3, in the case where fuel gas contains the odorant, a sulfur adsorption removing device for removing an odorant (sulfur component) in the fuel gas is provided. As the sulfur adsorption removing device, Zeolum (Registered trademark) manufactured by Tosoh Corporation or the like can be used.

The present invention is not limited to Embodiment Modes 1 to 3, and includes Embodiment Modes 4 and 5 as described below.

(Embodiment Mode 4)

A low NOx combustion apparatus of Embodiment Mode 4 includes a burner for burning a hydrocarbon-containing fuel, an endothermic device for absorbing heat from gas generated by the burner, a catalyst device that is brought into contact with the gas after passing through the endothermic device, and decreases carbon monoxide and does not decrease nitrogen oxides when the concentration ratio of oxygen, nitrogen oxides, and carbon monoxide in the gas is in a NOx/CO non-decreasing region, and decreases carbon monoxide and nitrogen oxides when the concentration ratio is in a NOx/CO decreasing region, a poisoning substance removing device provided on a primary side of the catalyst device, for adsorbing and removing a poisoning substance containing at least sulfur, which is contained in the gas and adsorbs to a catalyst component of the catalyst device or chemically reacts with the component, and an air-ratio adjusting device for adjusting a ratio of an air amount and/or a fuel amount supplied to the burner. Further, the air-ratio adjusting device adjusts the ratio of an air amount and/or a fuel amount so that the concentration ratio is in the NOx/CO decreasing region.

In Embodiment Mode 4, in the same way as in Embodiment Mode 1, a poisoning substance is removed by the poisoning substance removing device. Further, gas generated by combustion of the burner is subjected to an endothermic function by the endothermic device, thereby becoming gas containing oxygen, nitrogen oxides, and carbon monoxide at a predetermined concentration ratio. When an air ratio of the burner is changed in a region at a low air ratio, characteristics of air ratio-NOx/CO on the primary side of the catalyst (hereinafter, referred to as primary characteristics) are obtained regarding the gas containing oxygen, nitrogen oxides, and carbon monoxide on the primary side of the catalyst device, and gas having characteristics of air ratio-NOx/CO on the primary side is brought into contact with the catalyst device, whereby characteristics of air ratio-NOx/CO on the secondary side of the catalyst device (hereinafter, referred to as secondary characteristics) are obtained.

In the secondary characteristics, when the concentration ratio of oxygen, nitrogen oxides, and carbon monoxide in gas is in a NOx/CO non-decreasing region, carbon monoxide is decreased and nitrogen oxides are not decreased, and when the concentration ratio is in a NOx/CO decreasing region, carbon monoxide and nitrogen oxides are decreased. Then, in the NOx/CO decreasing region where the concentration of NOx on the secondary characteristics is lower than the concentration of NOx on the primary characteristics, which is a NOx/CO decreasing region where the concentration of carbon monoxide (CO concentration) is lower than the concentration of CO on the primary characteristics, the set air ratio is set, thereby the emitted amount of nitrogen oxides is decreased and that of carbon monoxide is also decreased by oxidation and reduction of the catalyst device.

In Embodiment Mode 4, the adjustment is made preferably in such a manner that the concentration of nitrogen oxides on the secondary side of the catalyst device is decreased to substantially zero. Further, the adjustment is preferably made in such a manner that the concentration of oxygen on the secondary side of the catalyst device is decreased to substantially zero.

(Embodiment Mode 5)

Embodiment Mode 4 can be expressed by the following Embodiment Mode 5. A low NOx combustion apparatus of Embodiment Mode 5 includes a burner for burning a hydrocarbon-containing fuel, an endothermic device for absorbing heat from gas generated by the burner, a catalyst device that is brought into contact with the gas containing oxygen, nitrogen oxides, and carbon monoxide after passing through the endothermic device, a poisoning substance removing device provided on the primary side of the catalyst device, for adsorbing and removing a poisoning substance containing at least sulfur, which is contained in the gas and adsorbs to a catalyst component of the catalyst device or chemically reacts with the component, and a control device for adjusting a ratio between combustible air and fuel of the burner. Further, a concentration ratio of oxygen, nitrogen oxides, and carbon monoxide in gas on the primary side of the catalyst device, which decreases the concentration of nitrogen oxides and that of carbon monoxide on the secondary side to substantially zero, is used as a reference concentration ratio. When the concentration ratio is set to be the reference concentration ratio, the concentration of nitrogen oxides and that of carbon monoxide on the secondary side of the catalyst device are decreased to substantially zero. Further, the catalyst device shows characteristics that when the concentration of oxygen on the primary side is made higher than the concentration of the reference oxygen corresponding to the reference concentration ratio, oxygen is detected in a concentration depending on a difference between the concentration of oxygen on the primary side and a reference oxygen concentration on the secondary side of the catalyst device, and when the concentration of carbon monoxide on the secondary side of the catalyst device is decreased to substantially zero, the concentration of nitrogen oxides is decreased, and the concentration of oxygen on the primary side is decreased to a greater extent than the reference oxygen concentration, carbon monoxide is detected in a concentration depending on a difference between the concentration of oxygen on the primary side and the reference oxygen concentration on the secondary side of the catalyst device, the concentration of nitrogen oxides on the secondary side of the catalyst device is decreased to substantially zero, and the concentration of carbon monoxide is decreased. The control device adjusts an amount ratio of combustible air to fuel in the burner on the basis of the concentration of oxygen on the secondary side of the catalyst device, by which the concentration of oxygen on the primary side of the catalyst device is adjusted with respect to the reference oxygen concentration to decrease the concentration of nitrogen oxides and that of carbon monoxide on the secondary side of the catalyst device.

Embodiment Mode 4 described above is expressed on the basis of the primary characteristics and the secondary characteristics of the burner and the endothermic device with respect to an air ratio obtained by the concentration of oxygen and/or that of carbon monoxide on the secondary side of the catalyst device. In contrast, Embodiment Mode 5 is expressed based on the primary characteristics of the burner and the endothermic device with respect to the concentration of oxygen on the primary side of the catalyst device and characteristics of the catalyst device.

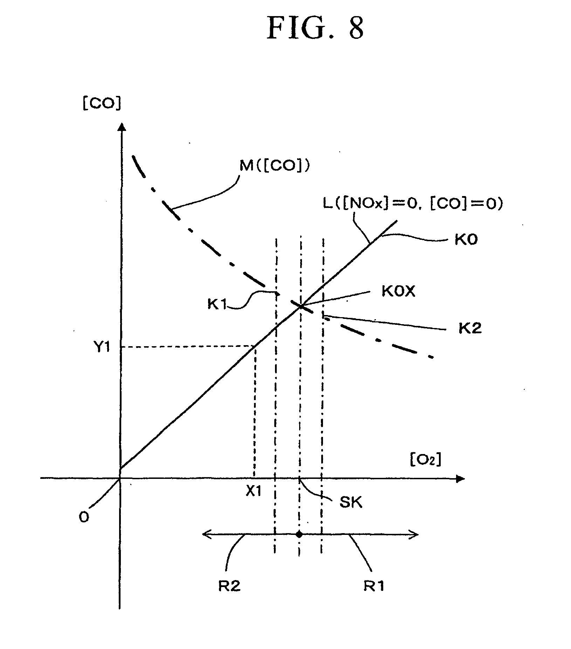

The catalyst characteristics will be explained as the following characteristics. In other words, as shown in a pattern diagram of FIG. 8, a characteristic line L of the concentration ratio is provided on the primary side of the catalyst device (secondary side [NOx] = 0, [CO] = 0 line). When the concentration ratio on the primary side of the catalyst device is positioned on the line L, the concentration of nitrogen oxides and that of carbon monoxide on the secondary side of the catalyst device are decreased to substantially zero. The line L is theoretically that in which the predetermined concentration ratio in formula (3) corresponds to 1, and FIG.8 illustrates formula (3) in the case where the set concentration ratio is 1. However, as described previously, it has been confirmed experimentally that the concentration of nitrogen oxides and that of carbon monoxide on the secondary side of the catalyst device can be decreased to substantially zero in a range where the concentration ratio is up to 2.0 in excess of 1.0. Therefore, the characteristic line (secondary side [NOx] = 0, [CO] = 0 line) is not limited to the line L given in FIG. 8.

Further, the present invention is not limited to Embodiment Modes 1 to 5 of the present invention. The adjustment of the concentration ratio can be performed only with the burner or mainly with the burner. That is, adjustment of a concentration ratio by the burner and the endothermic device includes any adjustment made by elements constituting a gas duct from the burner to the catalyst device other than the endothermic device and elements included in the gas duct.

Further, the mechanical control device may be constituted in such a manner that an air supply duct for combustible air is composed of a main duct and an auxiliary duct parallel therewith, an air flow rate is roughly adjusted by operating a valve body installed on the main duct, and the air flow rate is finely adjusted by operating a valve body installed on the auxiliary duct. The mechanical control device may be also constituted in such a manner that a fuel supply duct is composed of a main duct and an auxiliary duct parallel therewith, an air flow rate is roughly adjusted by operating a valve body installed on the main duct, and the flow rate is finely adjusted by operating a valve body installed on the auxiliary duct.

Further, the flow rate adjusting device of the air-ratio adjusting device may be that in which a motor mounted on a blower is controlled by an inverter. The inverter may be made with a known constitution. Also where the inverter is used, control may be provided depending on the air ratio control program used in controlling a damper.

Embodiment 1

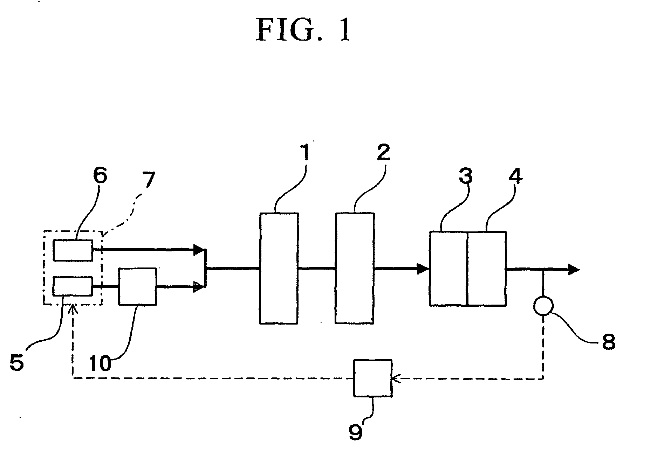

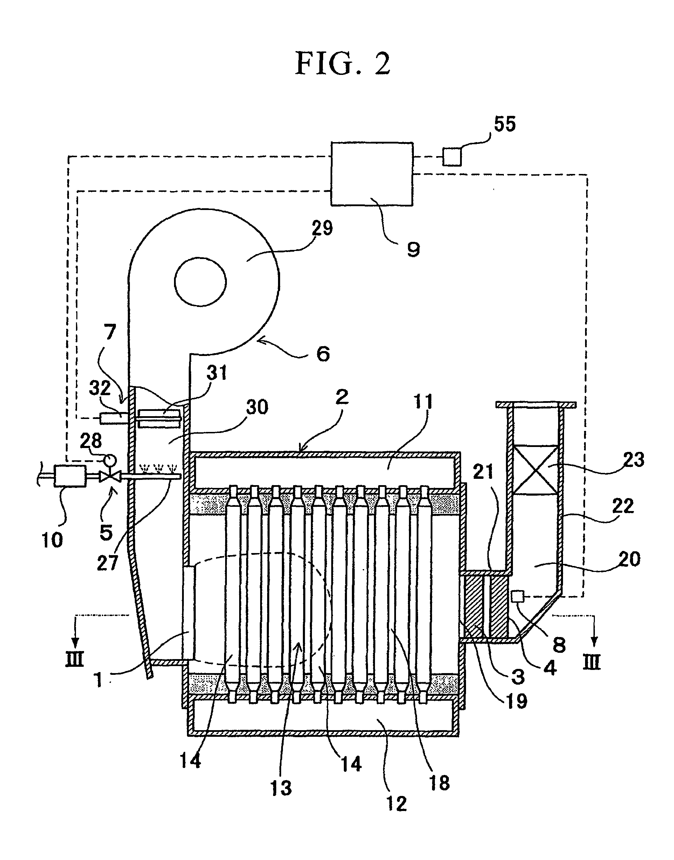

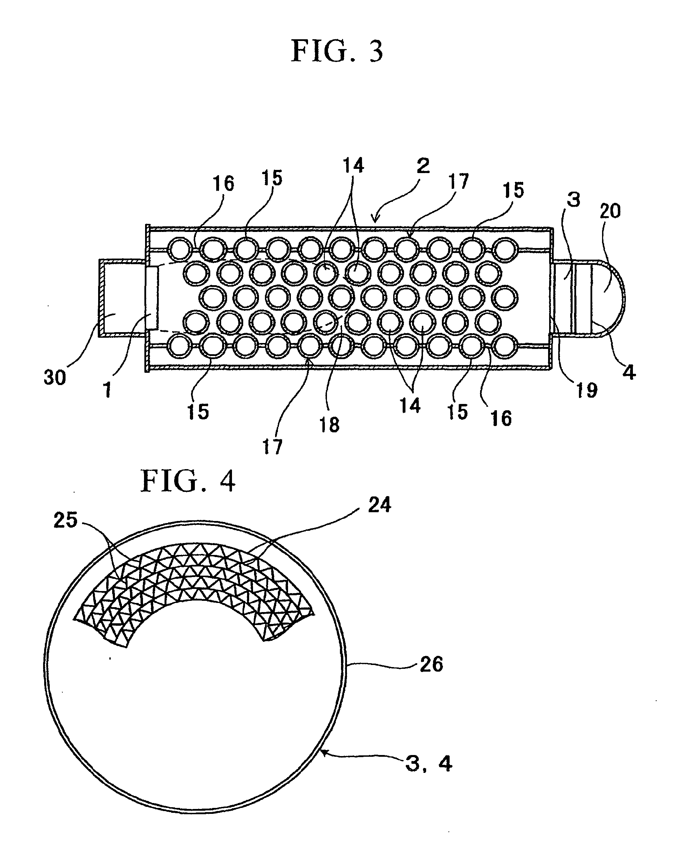

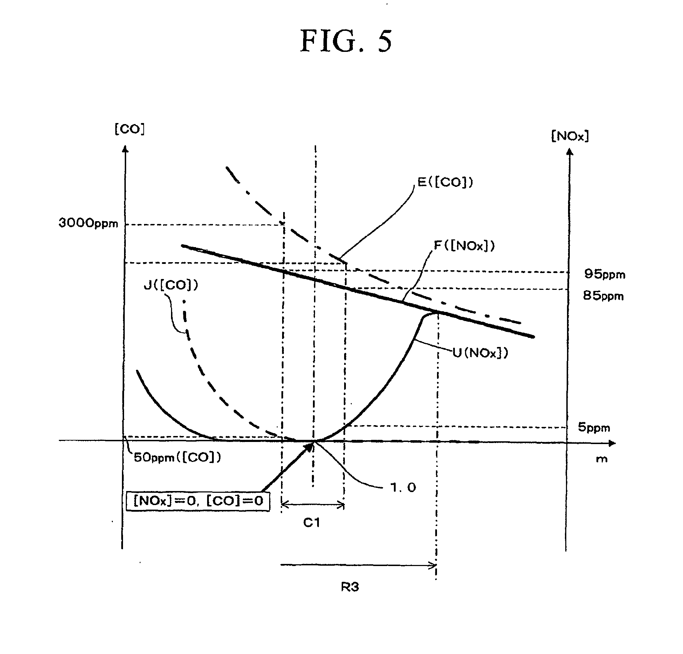

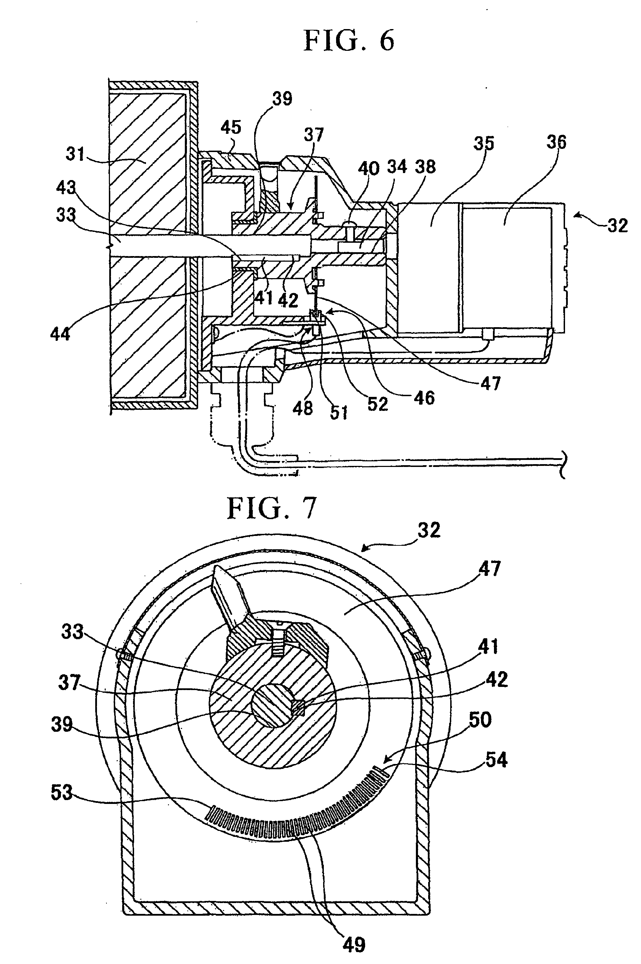

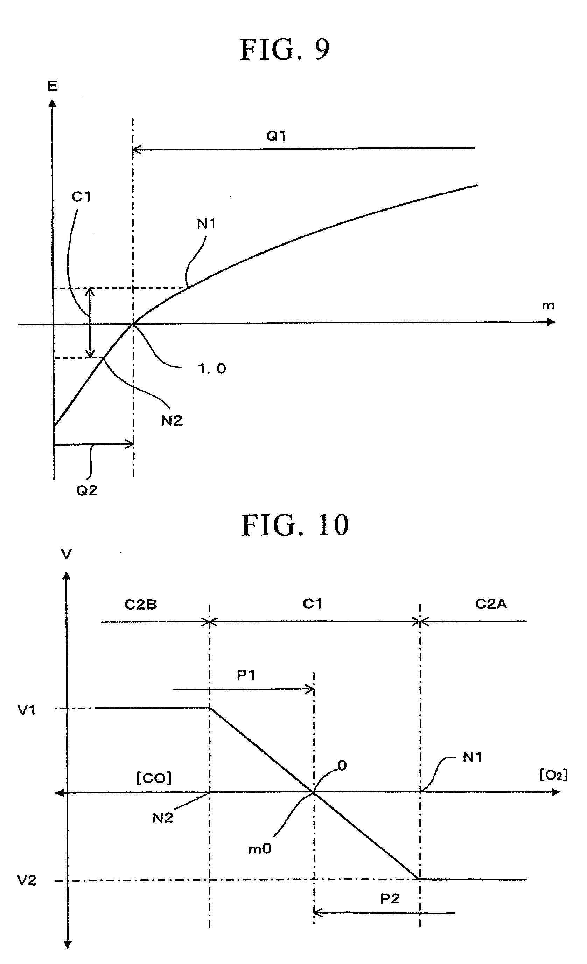

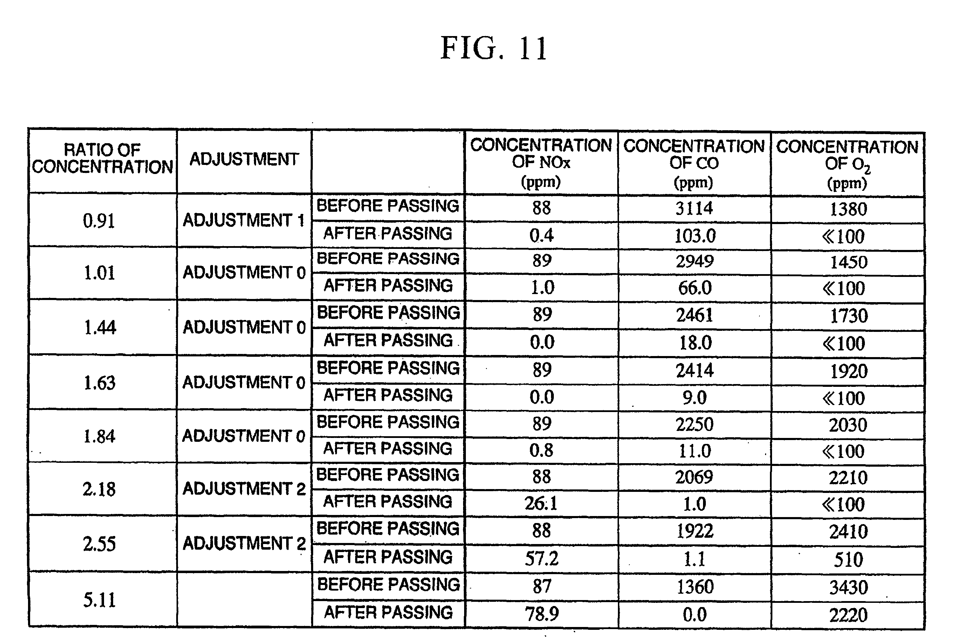

Next, an explanation will be made by referring to the drawings for Embodiment 1 in which the combustion apparatus of the present invention is applied to a steam boiler. FIG. 1 is a view for explaining a principle constitution of the present invention, FIG. 2 is a longitudinal sectional view of a steamboiler of Embodiment 1, FIG. 3 is a sectional view taken along line III to III of FIG. 2, FIG. 4 is a drawing showing a constitution of major parts when a poisoning substance removing device and a catalyst device given in FIGS. 2 and 3 are viewed from a direction in which exhaust gas flows, FIG. 5 is a drawing for explaining the characteristics of air ratio-NOx/CO of Embodiment 1, FIG. 6 is a partial sectional view of a damper position adjusting device of Embodiment 1, which is in operation, FIG. 7 is a partial sectional view of the damper position adjusting device in operation, FIG. 8 is a pattern diagram for explaining characteristics of a burner and endothermic device and the characteristics of a catalyst device given in Embodiment 1, FIG. 9 is a drawing for explaining output characteristics of the sensor given in Embodiment 1, FIG. 10 is a drawing for explaining motor control characteristics of Embodiment 1, and FIG. 11 is a drawing for explaining NOx and CO decreasing characteristics of Embodiment 1.

First, referring to FIG. 1, a steamboiler of Embodiment 1 will be described. The steam boiler includes a burner 1 for generating gas containing oxygen, nitrogen oxides, and carbon monoxide by combustion, an endothermic device 2 for absorbing gas generated by the burner 1, a poisoning substance removing device 3 which gas containing a poisoning substance as well as oxygen, nitrogen oxides, and carbon monoxide after passing through the endothermic device 2 at a predetermined concentration ratio comes into contact with and passes through, a catalyst device (hereinafter, merely referred to as "catalyst") 4 for coming into contact with the gas after passing through the poisoning substance removing device 3 to oxidize carbon monoxide and reduce nitrogen oxides, a fuel supply device 5 for supplying fuel gas (gas fuel) to the burner 1, a combustible air supply device 6 for supplying combustible air to the burner 1, an air-ratio adjusting device 7 for adjusting an air ratio of the burner 1 by controlling the fuel supply device 5 and/or the combustible air supply device 6 (controlling only the combustible air supply device 6 in Embodiment 1), a sensor 8 for detecting an oxygen concentration on a downstream (secondary) side of the catalyst device 4, and a controller 9 as a boiler controller for inputting a signal of the sensor 8 and the like to control the fuel supply device 5 and the combustible air supply device 6 and the like. The fuel supply device 5 includes a sulfur component removing device 10 for removing an odorant that is a sulfur component contained in gas fuel.

The burner 1 is a complete premix-type burner having a flat combustion face (face of ejecting premixed air) (refer to FIGS. 2 and 3). For the burner, a burner similar in constitution to the burner described in Patent Document 1 is used.

The endothermic device 2 is a storage water heater body, which is constituted of an upper header 11 and a lower header 12 to arrange a plurality of inner water tubes 14, 14 ..., which constitute the water tube group 13 between the headers. Then, as shown in FIG. 3, a pair of water tube walls 17, 17 constituted by connecting outer water tubes 15, 15... by using connection members 16, 16... are provided on both ends of endothermic device (the storage water heater body) 2 in a longitudinal direction, thereby forming a first gas duct 18 through which gas in which burning reactions are in progress and gas in which the burning reactions are completed from the burner 1 passes substantially linearly between these water tube walls 17, 17, the upper header 11, and the lower header 12. The burner 1 is installed on one end of the first gas duct 18, and a second gas duct (smoke duct) 20 through which exhaust gas passes is connected to the other end thereof, which is an exhaust gas outlet 19. The burner 1 and the storage water heater body 2 used in Embodiment 1 are known.

The exhaust gas duct 20 includes a horizontal part 21 and a perpendicular part 22, and the poisoning substance removing device 3 and the catalyst 4 are each attached to the horizontal part 21 so as to be removable individually (refer to FIG.2). A feed-water preheater 23, as an exhaust heat recovery system, is attached to the perpendicular part 19 so as to be positioned downstream from the catalyst 4, and the sensor 8 is placed between the catalyst 4 and the feed-water preheater 23.

The burner 1 and constituents from the burner 1 including the water tube group 13 to the catalyst 4 (in particular, the burner 1 and the water tube group 2 are major parts) are provided with functions to adjust the predetermined concentration ratio K in gas on the primary side of the catalyst 4 to the predetermined concentration ratios K0 and K1. In other words, when a set air ratio is adjusted (changed) by air-ratio adjusting device 7 to be described later, there are provided the characteristics of air ratio-NOx/CO on the primary side of the catalyst 4 as shown in FIG. 5. The characteristics of air ratio-NOx/CO are characteristics of air ratio-NOx/CO on the primary side of the catalyst 4, in which the concentration of nitrogen oxides on the secondary side of the catalyst 4 is decreased to substantially zero when the air-ratio adjusting device 7 is controlled to adjust the air ratio to the set air ratio of 1.0 (hereinafter, referred to as primary characteristics). Then, the catalyst 4 has characteristics of air ratio-NOx/CO on the secondary side of the catalyst 4, which are obtained by allowing the gas having the primary characteristics to be in contact with the catalyst 4 (hereinafter, referred to as secondary characteristics). The primary characteristics are the concentration ratio characteristics of constituents from the burner 1 to the catalyst 4, whereas the secondary characteristics are characteristics of the catalyst 4. The primary characteristics are to decrease the concentration of NOx and that of carbon monoxide on the secondary side of the catalyst 4 to substantially zero when the set air ratio is adjusted to 1.0. In this instance, the predetermined reference concentration ratio K0 in gas on the primary side of the catalyst 4 is given as a specific reference concentration ratio K0X (refer to FIG. 8).

In FIG. 5, a first line (characteristic line) E indicates the concentration of CO on the primary side of the catalyst 4, and a second line F indicates the concentration of NOx on the primary side. Further, a third line J indicates the concentration of CO on the secondary side of the catalyst 4, having such characteristics that the concentration of CO is decreased to substantially zero at an air ratio of 1.0 or higher and the concentration is abruptly increased as the air ratio is lower than 1.0. Still further, a fourth line U indicates the concentration of NOx on the secondary side of the catalyst 4, having such characteristics that the concentration of NOx is decreased to substantially zero in a predetermined region having the air ratio of 1.0 or lower, and the concentration is increased from substantially zero when the air ratio is in excess of 1.0 and soon equal to the concentration on the primary side of the catalyst 4. A region equal to or lower than an air ratio at which the concentration of NOx on the secondary side of the catalyst 4 is equal to the concentration on the primary side is referred to as NOx/CO decreasing region. A lower limit of the NOx/CO decreasing region can be given as an air ratio at which the concentration of CO on the secondary side of the catalyst 4 is 300 ppm (CO permissible exhaust standards in Japan). Characteristics of air ratio-NOx/CO are new characteristics of the low air ratio region, which have not yet been subjected to research. In this case, the low air ratio refers to an air ratio of 1.1 or lower and preferably 1.05 or lower, and a region having the low air ratio is referred to as the low air ratio region.

The catalyst 4 is provided with functions of oxidizing carbon monoxide contained in the gas after passing through the water tube group 13 (first reaction) and also reducing nitrogen oxides (second reaction, under absence of hydrocarbons). In Embodiment 1, used is a catalyst in which a catalyst activating substance is platinum. As already having been explained in the section of "Best Mode for carrying out the Invention, " then theoretical consideration is given on the basis of experimental results, there may be a first reaction in which the gas satisfying the concentration ratio of formula (3) is in contact with the catalyst activating substance (catalyst component) of the catalyst 4 to oxidize mainly carbon monoxide and a second reaction in which nitrogen oxides are reduced by carbon monoxide. Whether the first reaction proceeds or not will be determined, depending on the concentration of oxygen. In the catalyst 4, it is considered that the first reaction is predominant over the second reaction.

The catalyst 4 will be specifically explained by referring to a catalyst constituted in FIG. 4 and formed in such procedures that many fine irregularities are formed on the respective surfaces of a flat plate 24 and a corrugated plate 25, both of which are made of stainless steel, as the matrix, thereby applying a catalyst activating substance (not illustrated) on the surfaces. Then, the flat plate 24 having a predetermined width is placed on the corrugated plate 25, which are then wound helically and formed into a roll shape. A side plate 26 is used to enclose and fix the thus shaped substance to form the catalyst 4. Platinum is used as the catalyst activating substance. In addition, FIG. 3 shows the flat plate 24 and the corrugated plate 25 only partially.

The catalyst 4 is active in oxidation in a low temperature region and arranged at the horizontal part 21, which is on its way to the second gas duct 20, that is, at a position where the temperature of exhaust gas is approximately in a range of 100°C to 350°C. Then, the catalyst 4 is removably attached to the second gas duct 20 so as to be exchanged when deteriorated in performance.

The poisoning substance removing device 3 has a function of reacting with a catalyst component of the catalyst 4 to remove a sulfur component and an iron component as poisoning substances, and has the same configuration as that of the catalyst 4 shown in FIG. 4. More specifically, it is assumed that $CeO_2$ as a poisoning substance removing component is applied to the breathable matrix. What is different from the catalyst 4 in the poisoning substance removing device 3 is that the content of the catalyst component is set to be zero. The poisoning substance removing device 3 is removably provided independently from the catalyst 4 so as to be exchangeable with an interval placed with respect to the catalyst 4.

The fuel supply device 5 is constituted so as to include a fuel gas supply tube 27 and a flow rate adjusting valve 28 installed on the fuel gas supply tube 27 to adjust a fuel flow rate. The flow rate adjusting valve 28 is provided with functions of controlling fuel supply at a high combustion flow rate and a low combustion flow rate.

The fuel gas supply tube 27 of the fuel supply device 5 has a sulfur component removing device 10 for adsorbing and removing a sulfur component in an odorant contained in fuel. In Embodiment 1, Zeolum (Registered trademark) manufactured by Tosoh Corporation is used.

The combustible air supply device 6 is constituted so as to include a blower 29 and an air supply duct 30 for supplying combustible air from the blower 29 to the burner 1. The fuel gas supply tube 27 is connected inside the air supply duct 30 so as to eject fuel gas.

The air-ratio adjusting device 7 is constituted so as to include a damper 31 as flow rate adjusting device for adjusting an aperture (cross-sectional area of the flow channel) of the air supply duct 30, a damper position adjusting device 32 for adjusting an aperture position of the damper 31 (refer to FIGS. 6 and 7), and the controller 9 for controlling the operation of the damper position adjusting device 32.

The damper position adjusting device 32 is, as shown in FIG. 6, provided with a driving shaft 34 removably connected to a rotating shaft 33 of the damper 31. The driving shaft 34 can be rotated by a motor 36 via a reduction gear 35. The motor 36 includes any motor freely adjustable for rotation position and stop position. In Embodiment 1, a stepping motor (pulse motor) is used.

The driving shaft 34 is connected to the rotating shaft 33 of the damper 31 via a coupling 37, by which it can be rotated substantially coaxially with the rotating shaft 33 in an integral manner. The coupling 37 is formed in a stepped cylindrical shape, the central part of which is provided with stepped holes 38, 39, which have penetrated axially. The driving shaft 34 is inserted into the minor diameter hole 38, and the driving shaft 34 is integrally fixed to the coupling 37 by a fitting screw 40. The rotating shaft 33 of the damper 31 can be inserted into the major diameter hole 39, and the rotating shaft 33 can be integrally rotated by a key 41 together with the coupling 37. Therefore, key grooves 42, 43 are formed on the rotating shaft 33 and the major diameter hole 39 of the coupling 37, respectively.

The above-mentioned coupling 37 is retained in an external case 45 of the damper position adjusting device 32 so as to rotate freely in a state that the driving shaft 34 is inserted into one end thereof, with the other end inserted via a bearing 44. The external case 45 is constituted in such a manner that the reduction gear 35 and the motor 36 are retained on one end thereof and the coupling 37 and abnormal rotation detecting device 46 are contained therein hermetically on the other end thereof in a state that the key groove 43-equipped major diameter hole 39 of the coupling 37 is exposed.

The abnormal rotation detecting device 46 is provided with a plate to be detected 47 and a detector 48. The plate to be detected 47 is extended radially outwardly and fixed to a stepped portion at the center of the coupling 37 in an axial direction. The plate to be detected 47 is installed so as to be coaxial with the coupling 37 and the driving shaft 34. A slit forming region 50 having many slits 49, 49... equally spaced in a peripheral direction is installed partially at an outer periphery of the plate to be detected 47. In Embodiment 1, the slit forming region 50 is installed only in a quarter of a circular arc (90 degrees). Each of the slits 49 formed at the slit forming region 50 is identical in shape and size. In Embodiment 1, narrow and long rectangular grooves along the plate to be detected 47 in the radial direction are punched peripherally at equal intervals whereby the slit 47 are formed.

The detector 48 for detecting the slit 49 is fixed to the external case 45. The detector 48 is composed of a transmission-type photo interrupter and installed in such a manner that an outer periphery of the plate to be detected 47 is placed between a light emitting device 51 and a light receiving device 52. The plate to be detected 47 is placed between the light emitting device 51 and the light receiving device 52 of the detector 48, thereby the presence or absence of receipt of light from the light emitting device 51 by the light receiving device 52 is switched by whether or not the slit 49 on the plate to be detected 47 is arranged at a position corresponding to the detector 48 (position corresponding to a light path from the light emitting device 51 to the light receiving device 52). Thereby, it is possible for the detector 48 to detect the slit 49 formed on the plate to be detected 47.

The damper position adjusting device 32 is positioned so that the damper 31 keeps the air supply duct 30 fully closed in a state that a slit 53 at the clockwise end of the slit forming region 50 shown in FIG. 7 is arranged at a position corresponding to the detector 48 and attached to the rotating shaft 33 of the damper 31.

Then, the slit forming region 50 is formed only at a portion corresponding to a quarter of the plate to be detected 47. Therefore, in a state that the slit 53 at the clockwise end of the slit forming region 50 is arranged at a position corresponding to the detector 48, as described above, the damper 31 keeps the air supply duct 29 fully closed. On the other hand, in a state that a slit 54 at the counter-clockwise end of the slit forming region 50 is arranged at a position corresponding to the detector 48, the damper 31 keeps the air supply duct 30 fully opened.

In a state that the motor 36 and the detector 48 are connected to the controller 9, the damper position adjusting device 32 is constituted so as to be able to control the rotation of the motor 36, while monitoring an abnormal rotation of the damper 31. More specifically, in order to control the motor 36, the controller 9 is provided with a circuit for preparing control signals including driving pulse to the motor 36 and able to output the thus prepared control signal to the motor 36. Thereby, the motor 36 is arbitrarily controlled for the rotation angle, depending on normal rotation or reverse rotation and driving amount, that is, the number of driving pulses. Further, the motor 36 is constituted so as to be able to control the rotation speed by changing the driving pulse in interval (feeding velocity).

In controlling an actual opening and closing of the damper 31, the controller 9 at first operates to detect an original point so that a fully closed position of the damper 31 can be given as the original point. First, in FIG. 7, the plate to be detected 47 is rotated in a counter-clockwise direction. On the assumption that the detector 48 is at present arranged inside the slit forming region 50 of the plate to be detected 47, the detector 48 detects the slit 49 regularly in accordance with the rotation of the plate to be detected 47. Therefore, the detected pulse is output to the controller 9 as a detection signal. Then, the plate to be detected 47 is rotated until the detector 48 is arranged outside the slit forming region 50, thereby no pulse is detected. If no pulse is detected within a predetermined time, the controller 9 recognizes that the detector 48 is outside the slit forming region 50, switching the rotating direction to a reverse direction. In other words, in Embodiment 1, the original point is defined as a position at which the plate to be detected 47 is rotated reversely in a clockwise direction to detect the first pulse (slit 53 at the clockwise end). Confirmation of the original point by the clockwise rotation is made at a lower speed than the counter-clockwise rotation before the rotating direction is switched.

Since the thus detected original point corresponds to a fully closed position of the damper 31, the controller 9 outputs a driving signal to the motor 36 on the basis of this state, thus making it possible to control the opening and closing of the damper 31. If the controller 9 drives the motor 36 to open or close the damper 31, a detection signal of the slit 49 is obtained as a pulse from the detector 48 accordingly. Therefore, the controller 9 is able to monitor an abnormal rotation of the damper 31 by comparing a detection signal from the detector 47 with a control signal to the motor 36. More specifically, a control signal composed of driving pulse to the motor 36 is compared with a detection signal composed of detection pulse of the slit 49 by the detector 48, thereby monitoring the presence or absence of abnormal rotation.

For example, where no detection pulse is detected from the detector 47 despite the fact that a driving pulse has been sent to the motor 36, the controller 9 determines it to be an abnormal rotation. In this instance, the detection pulse from the detector 47 is usually different in frequency from driving pulse to the motor 36. Therefore, the controller 9 performs control with the difference taken into account. For example, the controller 9 controls in such a manner that the abnormal rotation is determined only in a case where no pulse of detection signal is detected at all even after the elapse of a predetermined pulse of a driving signal. The controller 9 performs a notification operation of the abnormal rotation and halts the combustion upon determination of the abnormal rotation. In contrast, the abnormal rotation can also be detected in a case where any pulse is detected by the detector 48, despite the fact that no driving pulse has been sent to the motor 36.

The controller 9 is constituted so as to control the motor 34 by referring to a previously stored air ratio control program based on signals detected by the sensor 8 in such a manner that an air ratio of the burner will be a set air ratio (first control condition) and also a concentration ratio of the gas before flowing into the catalyst 4 satisfies the following formula (3) at this set air ratio (second control condition).

$$([NOx] + 2[O_2]) / [CO] \leq 2.0 \cdots (3)$$

where [CO], [NOx], and [O$_2$] represent the concentrations of carbon monoxide, nitrogen oxides, and oxygen, respectively, satisfying the condition of [O$_2$] > 0.

In Embodiment 1, it is the first control condition that gives a direct control. Therefore, the first control condition is satisfied, by which the second control condition is automatically satisfied. This will be explained hereinafter by referring to FIGS. 5 and 8.

The characteristics of air ratio-NOx/CO given in FIG. 5 are expressed based on the primary characteristics of constituents including the burner 1 and the water tube group 2 as well as the secondary characteristics. Further, in FIG. 8, they are expressed based on the primary characteristics of the constituents with respect to the concentration of oxygen on the primary side of the catalyst 4 and the characteristics of the catalyst 4.

As shown in FIG. 8, the characteristics of the catalyst 4 are expressed by a fifth line L ([NOx] on the secondary side = 0, [CO] = 0 line) related to the concentration ratio on the primary side of the catalyst 4. The fifth line L is a line in which the concentration of nitrogen oxides and that of carbon monoxide on the secondary side of the catalyst 4 are decreased to substantially zero when the concentration ratio on the primary side of the catalyst 4 is positioned (placed) on the line. The fifth line L corresponds to a case where the predetermined concentration ratio of formula (3) is 1. In other words, the fifth line L is a line satisfying the following formula (3A).

$$[NOx] + 2[O_2] = [CO] \cdots (3A)$$

In this instance, as shown in FIG. 11, [NOx] is approximately from 1/50 to 1/30 of [CO] in concentration. Thus, in FIG. 8, NOx concentration characteristics with respect to the concentration of oxygen are omitted, and [NOx] of formula (3A) is neglected. Where the concentration of oxygen on the primary side is X1 on the fifth line L, the concentration of carbon monoxide on the primary side Y1 will be Y1 = 2X1 + [NOx] . In addition, since confirmation has been made for the predetermined concentration ratio, which decreases the concentration of nitrogen oxides and that of carbon monoxide on the secondary side of the catalyst 4 to substantially zero in a range of the concentration ratio exceeding 1.0 up to 2.0, the fifth line L is not limited to the line L shown in the drawing but may include any line satisfying formula (3).

Then, a concentration ratio of oxygen, nitrogen oxides, and carbon monoxide at a point at which a sixth line M indicating the primary characteristic curve of the burner 1 and the water tube group 13 intersects with the fifth line L is referred to as reference concentration ratio. Where the concentration ratio on the primary side is given as the reference concentration ratio, the catalyst 4 has such characteristics that the concentration of nitrogen oxides and that of carbon monoxide on the secondary side of the catalyst 4 are decreased to substantially zero.

Then, the catalyst 4 has such characteristics that when the concentration of oxygen on the primary side is made higher than a reference oxygen concentration SK corresponding to the reference concentration ratio, oxygen is detected on the secondary side of the catalyst 4 in a concentration depending on a difference between the concentration of oxygen on the primary side and the reference oxygen concentration, the concentration of carbon monoxide on the secondary side of the catalyst 4 is decreased to substantially zero, and the concentration of nitrogen oxides on the secondary side of the catalyst 4 is decreased to a greater extent than the concentration of nitrogen oxides on the primary side by reduction reaction. A region **characterized in that** oxygen is detected on the secondary side of the catalyst 4 and the concentration of nitrogen oxides on the secondary side is decreased to a greater extent than the concentration of nitrogen oxides on the primary side is referred to as secondary NOx leakage region R1. The secondary NOx leakage region R1 is a region, which realizes the above-mentioned Adjustment 2, and an air ratio of the burner 1 is in excess of 1.0.

The catalyst 4 also has such characteristics that when the concentration of oxygen on the primary side is lower than the reference oxygen concentration SK, carbon monoxide is detected on the secondary side of the catalyst 4 in a concentration depending on a difference between the concentration of oxygen on the primary side and the reference oxygen concentration SK, and the concentration of nitrogen oxides on the secondary side of the catalyst 4 is decreased to substantially zero in a predetermined range. A region **characterized in that** carbon monoxide is detected on the secondary side of the catalyst 4 and the concentration of nitrogen oxides is decreased to substantially zero is referred to as secondary side CO leakage region R2. The secondary side CO leakage region R2 is a region, which realizes the above-mentioned Adjustment 0 and Adjustment 1, and an air ratio of the burner 1 is 1.0 or less. The air ratio of the burner 1 is set in a range free of hydrocarbons but containing oxygen on the primary side of the catalyst 4, where it is set to less than 1.0. A region, which combines the secondary NOx leakage region R1 with the secondary CO leakage region R2, is referred to as NOx/CO decreasing region R3.

The above-mentioned characteristics of the catalyst 4 shown in FIG. 8 are in agreement with the characteristics of air ratio-NOx/CO shown in FIG. 5. As apparent from FIG. 8, when the concentration of oxygen and/or that of the carbon monoxide on the secondary side of the catalyst 4 are detected and the air-ratio adjusting device 7 is controlled in such a manner that the concentration of oxygen and/or that of carbon monoxide are decreased to zero, the concentration ratio on the primary side of the catalyst 4 is controlled to the reference concentration ratio, and the concentration of nitrogen oxides and that of carbon monoxide on the secondary side of the catalyst 4 can be decreased to substantially zero. Thus, the first condition control condition is satisfied, by which the second control condition is also to be satisfied.

Failure to satisfy the first condition would result in the generation of unburned combustibles such as hydrocarbons. In this case, energy loss would be caused, and the catalyst 4 would be unable to attain an effective decrease in NOx.

The second condition is necessary in decreasing the concentration of emitted nitrogen oxides to substantially zero. It has been found by experiments and theoretical consideration that in order to decrease the concentration of nitrogen oxides and that of carbon monoxide on the secondary side of the catalyst 4 to substantially zero, a concentration ratio, which gives $([NOx] + 2 [O_2]) / [CO]$ maybe approximately 1 by referring to the first reaction and the second reaction. It has been, however, confirmed that the concentration of emitted nitrogen oxides can be decreased to substantially zero even at the concentration ratio of 1 or higher, that is, from 1.0 to 2.0.

Used as the sensor 8 is a zirconia type air-fuel ratio sensor which has a resolution of $O_2$ of 50 ppm and which is excellent in responsiveness, that is, having a response time of 2 sec or less. As shown in FIG. 9, output characteristics of the sensor 8 are those in which an output is given as an output related to the concentration of oxygen on the positive side and as an output related to the concentration of carbon monoxide on the negative side.

The air ratio control program controls the air ratio of the burner 1 to be a set air ratio based on a detected signal of the sensor 8. Specifically, the air ratio control program is configured as follows. That is, as shown in FIG. 10, the air ratio control program includes a control procedure of controlling the driving amount of the motor 36 by providing a first control zone C1 of changing a feeding velocity V (driving amount per unit time) of the motor 36 in accordance with the difference between the detected air/fuel ratio and the set air ratio based on an output value (detected air/fuel ratio represented by an oxygen concentration signal and a carbon monoxide concentration) from the sensor 8 and second control zones C2A, C2B of setting the feeding velocity V to be a first set value V2 and a second set value V1, respectively, on an outside of the first control zone C1. In FIG. 10, P1 represents a damper open region, and P2 represents a damper close region.

The set range of the first control zone C1 is set by a oxygen concentration N1 (for example, 100 ppm) and a carbon monoxide concentration N2 (for example, 50 ppm), and the first control zone C1 is controlled so as to fall in the set range defined by the set oxygen concentration and the set carbon monoxide concentration so as to set the air ratio to be a set air ratio of substantially 1.

A feeding velocity V in the first control zone C1 can be calculated by the following formula (4). The feeding velocity V corresponds to a driving amount per unit time. A rotating angle in Step 1 of the motor 36 of this embodiment is 0.075 degrees, which corresponds to change in approximately 30 ppm in terms of $O_2$.

$$V = K \times \Delta X \cdots (4)$$

where K represents a gain, and $\Delta X$ represents a deviation calculated by (the detected air/fuel ratio of the sensor 8) - (the set air/fuel ratio).

Further, the controller 9 is configured so as to notify that the reaction between the poisoning substance removing device 3 and the poisoning substance is put in a saturated state by a notifying unit 55 in accordance with a previously stored maintenance program. The maintenance program is configured so as to notify an exchange time of the poisoning substance removing device 3 and the catalyst 4 by the notifying unit 55, when the operation time of a low combustion conversion reaches the set period T (for example, 1200 hours). In order to realize the above, the capacity of the poisoning substance removing device 3 is set so that the reaction of the poisoning substance removing device 3 is put in a saturated state when gas is allowed to flow through the poisoning substance removing device 3 for the set period T.

In other words, the maintenance period of the poisoning substance removing device 3 and the catalyst 4 is set based on the period T from a time of the start of the reaction of the poisoning substance removing device 3 to a time when the reaction is put in a saturated state. The capacity of the poisoning substance removing device 3 is obtained by an experiment, measuring the amounts of a sulfur component and an iron component contained in combustible air. The set period T is configured so as to be adjustable manually and measured by a built-in timer (not shown) in the controller 9.

The notification by the notifying unit 55 is performed visually or aurally, and a management apparatus or a mobile telephone positioned away from the steam boiler can be used as the notifying unit 55.

(Operation of Embodiment 1)

Next, the operation of the steam boiler with the above configuration will be described. First, a basic operation will be described with reference to FIG. 2. Combustible air (outside air) supplied from a blower 29 is pre-mixed with fuel gas supplied from the fuel gas supply tube 27 in an air supply duct 30. The premixed gas is ejected from the burner 1 to a first gas duct 18 in a storage water heater body 2. The premixed gas is fired by a firing device (not shown) and burnt. The combustion is conducted at a low air ratio as described above.

The gas generated in accordance with this burning is in contact with an upstream water tube group 13 and cooled. Thereafter, the gas virtually completes its burning, and heat is absorbed through heat exchange with a downstream water tube group 13 to yield gas at approximately 100°C to 350°C.

The gas is free of hydrocarbon, and contains oxygen, nitrogen oxides, and carbon monoxide and a poisoning substance that reacts with the catalyst component and is adsorbed thereto. Since a sulfur component of an odorant in gas fuel is removed by the poisoning substance removing device 10 having the fuel supply tube 27, a sulfur component made of a sulfur oxide present in combustible air as sulfur oxide fine particles and an iron component present in gas as iron oxide are contained as poisoning substances.

The poisoning substance is removed by adsorption from the gas by the poisoning substance removing device 3, and gas free of the poisoning substance flows to the catalyst 4. In the catalyst 4, carbon monoxide is oxidized and nitrogen oxides are reduced due to the contact between the gas and the catalyst component. Consequently, as described later, the emission amount of nitrogen oxides and carbon monoxide in the gas is decreased to substantially zero, and they are emitted to the atmosphere as exhaust gas from a second gas duct 20.

Then, when the gas amount passing to the poisoning substance removing device 3 exceeds a predetermined amount, and the adsorption of a poisoning substance by the poisoning substance adsorbing component is saturated, a poisoning substance leaks to gas flowing from the poisoning substance removing device 3, and the catalyst function of the catalyst 4 decreases. Thus, the concentration of nitrogen oxides on a secondary side of the catalyst device cannot be decreased to substantially zero any more, so the controller 9 notifies the notifying unit 55 that the exchange of the poisoning substance removing device 3 is necessary. In Embodiment 1, although the catalyst 4 is configured so as to be exchanged simultaneously with the poisoning substance removing device 3, the catalyst 4 can be exchanged at a timing at which intended performance required by the catalyst 4 is not exhibited any more. The timing of exchange is set to be longer than the timing of exchange of the poisoning substance removing device 3, by using a timer or a sensor for detecting the concentrations of NOx and CO.

An administrator or maintenance member who receives notification from the notifying unit 55 removes the poisoning substance removing device 3, attaches a new poisoning substance removing device 3, and resumes the operation of a boiler. At a time of resumption, the count of the set time T by the timer is reset. The exchanged poisoning substance removing device 3 entails cost, so it is abandoned without being recycled. However, the poisoning substance removing device 3 is recycled if low-cost recycling can be performed.

Thus, due to the presence of the poisoning substance removing device 3, the ultra-low pollution of decreasing the amounts of emitted nitrogen oxides and carbon monoxide to substantially zero could be continued for the set period of time T. Further, a boiler operation can be interrupted for a short period of time by the exchange of the poisoning substance removing device 3.

Next, an explanation will be made for an air ratio controlled by the air-ratio adjusting device 32. The boiler used in this embodiment is operated by switching high combustion to low combustion. Therefore, the damper 31 is positioned by selecting a high combustion airflow position or a low combustion airflow position.

The damper 31 is adjusted for position by the damper position adjusting device 32 on the basis of instructions from the controller 9. In other words, the controller 9 inputs a signal for selecting the high combustion or the low combustion and an output value corresponding to a detected air/fuel ratio of the sensor 8 to output a driving signal of the motor 36, thereby moving the damper 31. A set rotation position of the damper 31, which is used as a set air/furl ratio on high combustion or low combustion, is stored at the controller 9 as an initial value for each pulse number from an original point.

First, an explanation will be given for control on high combustion. The controller 9 determines whether the present rotation position of the damper 31 is on the opening side with respect to the set rotation position (the side to be controlled in a closing direction) or on the closing side (the side to be controlled in an opening direction) and also calculates the driving pulse number of the motor 36. It also determines whether the detected value belongs to the first control zone or the second control zones A, B in FIG. 10.

Where the detected value belongs to the second control zone C2A, the controller 9 drives the motor 36 at the first set feeding velocity V2 and also at a calculated driving pulse to close the damper 31 at a high velocity. Where it belongs to the second control zone C2B, the controller 9 drives the motor 36 at the second set feeding velocity V1 and also at a calculated driving pulse to open the damper 31 at a high velocity. Therefore, where the detected value is relatively distant from the set air/fuel ratio, the detected air/ fuel ratio is controlled so as to come closer to the set air/fuel ratio at a high velocity, thus making it possible to give air ratio control excellent in responsiveness.

Further, where the detected value belongs to the first control zone C1, the controller 9 calculates a feeding velocity of the motor 36 based on formula (4) after determination of a rotational direction, and the motor 36 is driven based on the thus calculated feeding velocity and the calculated driving pulse. The control at the first control zone is made at a higher feeding velocity as the detected value is further distant from a set air/fuel ratio. Due to the above-mentioned control, it is possible to smoothly bring the value closer to a set air/fuel ratio. Further, a stepping motor capable of securing the control of a rotational position is used and a feeding velocity is controlled so as to slow down as the detected air/fuel ratio comes closer to the set air/fuel ratio, thus making it possible to prevent overshoot and hunting of the air ratio in the vicinity of the set air/fuel ratio.

The air ratio is controlled as described above, by which an air ratio of the burner 1 will be a low air ratio close to 1 and the concentration ratio of gas on the primary side of the catalyst 4 is controlled so as to change to a lesser extent, thus stably satisfying formula (3). As a result, the concentration of nitrogen oxides on the secondary side of the catalyst 4 can be decreased to substantially zero and that of carbon monoxide can also be decreased to a value within a practical use.

(Experiment 1)

An explanation will be given for the result of an experiment conducted under the following conditions, that is, a storage water heater body 2 having a capacity of evaporation per unit time of 800 kg (storage water heater body with the production type of SQ-800 manufactured by the applicant) was assembled into a premixed burner 1 to conduct combustion at 45.2 $m^3N/h$. Where the set air ratio was given as 1.0005 or less, the concentration of carbon monoxide, that of nitrogen oxides, and that of oxygen on the primary side of the catalyst 4 (before passage of the catalyst 4) were adjusted to 2,295 ppm, 94 ppm, and 1, 655 ppm in terms of an average value for 10 minutes, respectively, and those on the secondary side of the catalyst 4 (after passage of the catalyst 4) were adjusted to less than 13 ppm, 0.3 ppm, and 100 ppm in terms of an average value for 10 minutes, respectively. In this instance, the concentration of oxygen on the secondary side of the catalyst 4, 100 ppm, was a detection limit of oxygen concentration. Further, temperatures of gas before and after the catalyst 4 were approximately 302°C and 327°C, respectively. In Experiment 1 as well as the following Experiments 2 and 3, the catalyst 4 was placed slightly upstream from the feed-water preheater 20, and measurement instruments were placed before and after the catalyst 4. The respective concentrations of gas after passage of the catalyst 4 were measured by using PG-250 manufactured by Horiba Ltd., and the respective concentrations before passage of the catalyst 4 were measured by using COPA-2000, manufactured by Horiba Ltd. As a matter of course, hardly any change may be found in the measurement concentration where the catalyst 4 is arranged in the position shown in FIG. 1.

(Experiment 2)

FIG. 11 shows values at each concentration ratio at the concentration of carbon monoxide, that of nitrogen oxides, and that of oxygen obtained in a case where the same burner 1 and the storage water heater body 2 as those of the Experiment 1 were used to conduct combustion at the same rate as that of Experiment 1, and a catalyst using Pd with an inner diameter of 360 mm was prepared Pd as a catalyst activating substance. In this instance, the concentration of oxygen after passage of the catalyst was measured by the same oxygen concentration sensor as that used in Experiment 1 and indicated as 100 ppm, even when the concentration was actually 100 ppm or less. Temperatures of gas before and after the catalyst 4 were in the ranges of approximately 323°C to 325°C and approximately 344°C to 346°C, respectively.

According to the above Embodiment 1, damper position adjusting device (air-ratio adjusting device) 30 for adjusting the ratio of combustible air to fuel is used to control the concentration ratio of oxygen, nitrogen oxides, and carbon monoxide on the primary side of the catalyst 4 to the specific reference concentration ratio K0X (Adjustment 0) and also decrease the concentration of emitted NOx and that of emitted CO. Therefore, as compared with low NOx technologies by addition of water/steam and by use of a denitration agent, the present invention is able to decrease NOx and CO in a simple constitution in which air-ratio adjusting device and a catalyst are used.

Further, since the air ratio is set to substantially 1.0, an energy-saving operation can be performed. Incidentally, an ordinary boiler operated at oxygen concentration of 4% (air ratio of approximately 1.235) is compared with that operated at an oxygen concentration of 0% (air ratio of approximately 1.0) to find that the boiler efficiency is increased approximately by 1 to 2%. Nowadays, when measures are required for combating global warming, an increase in boiler efficiency can make a great contribution to industries.

Still further, the sensor 8 is installed on the secondary side from the catalyst 4 to control an air ratio, thus making it possible to obtain a stable control, as compared with a case where the sensor is installed on the primary side from the catalyst 4 to control the air ratio. The air ratio is also controlled at a resolution of oxygen concentration of 100 ppm or lower, thus making it possible to obtain air ratio control responsively and stably.

Embodiment 2

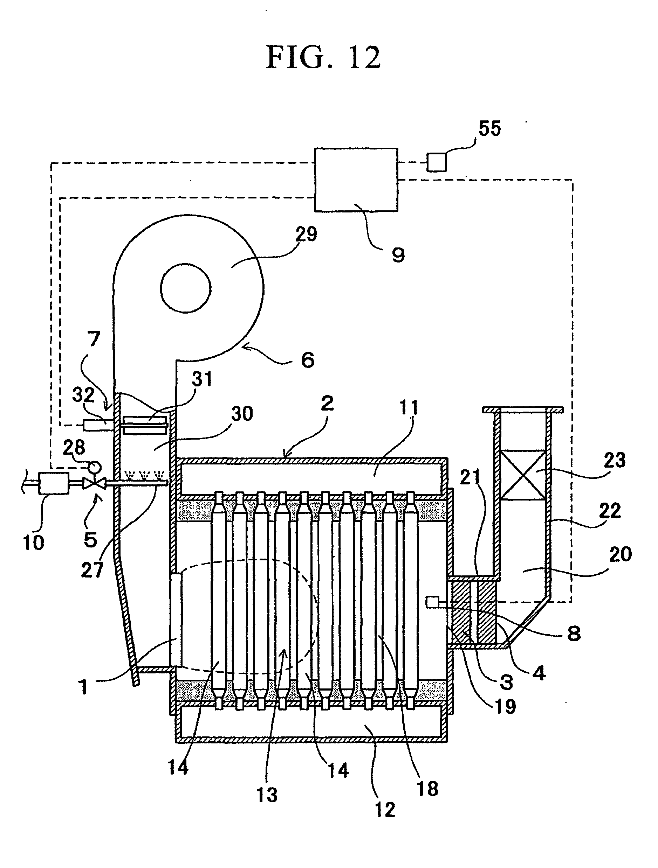

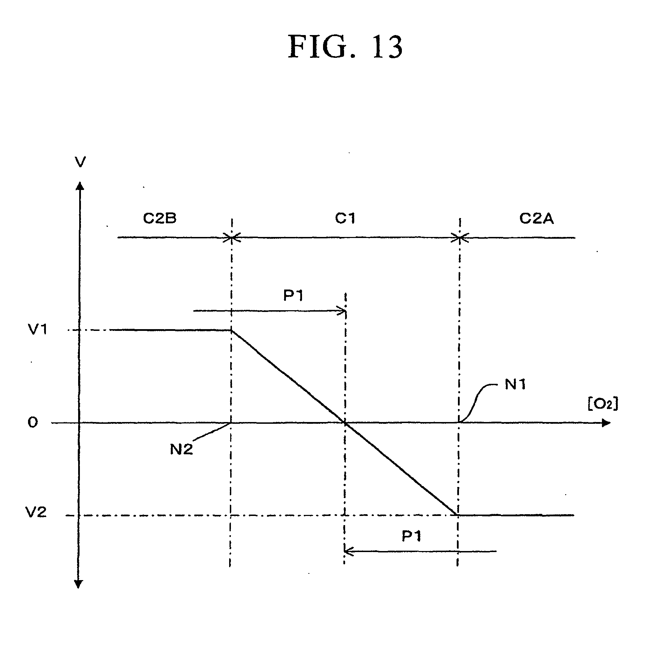

Another Embodiment 2 of the present invention will be explained by referring to FIG. 12 and FIG. 13. In Embodiment 2, a sensor 8 for detecting the concentration of oxygen is installed not on the secondary side of the catalyst 4 but on the primary side. The sensor 8 is used exclusively as a sensor for detecting the concentration of oxygen. Then, FIG. 13 shows control characteristics of the motor 36 on the basis of the sensor 8. Hereinafter, an explanation will be made only for parts different from those of Embodiment 1, with an explanation omitted for common parts.

In Embodiment 2, an air ratio is controlled indirectly by detecting the concentration of oxygen on the primary side of the catalyst 4 by using the sensor 8 in such a manner that a set air ratio is set to 1 (the concentration of oxygen on the secondary side of the catalyst 4 is decreased to zero). It is now known on the basis of various experiment results that where the concentration of oxygen on the primary side of the catalyst 4 is controlled to a value exceeding 0 and equal to or less than 1%, formula (3) is satisfied and the concentration of oxygen on the secondary side of the catalyst 4 is decreased to substantially zero. In other words, it is known that the air ratio can be set to substantially 1.0.

As shown in FIG. 13, the air ratio control program of Embodiment 2 includes control procedures for controlling a driving amount of the motor 36, by providing a first control zone C1 for changing, based on a detected value from the sensor 8 (oxygen concentration signal), a feeding velocity V of the motor 36 (driving amount per unit time) depending on a difference between the detected value and the set oxygen concentration value, and second control zones C2A, C2B for dividing the feeding velocity V into a first set value V2 and a second set value V1 outside the first control zone C1, respectively.

A range in which the first control zone C1 is set will be controlled so as to fall within a range set by oxygen concentration N1 and oxygen concentration N2. A feeding velocity V at the first control zone C1 will be calculated by referring to formula (4) similar to Embodiment 1.

Embodiment 3

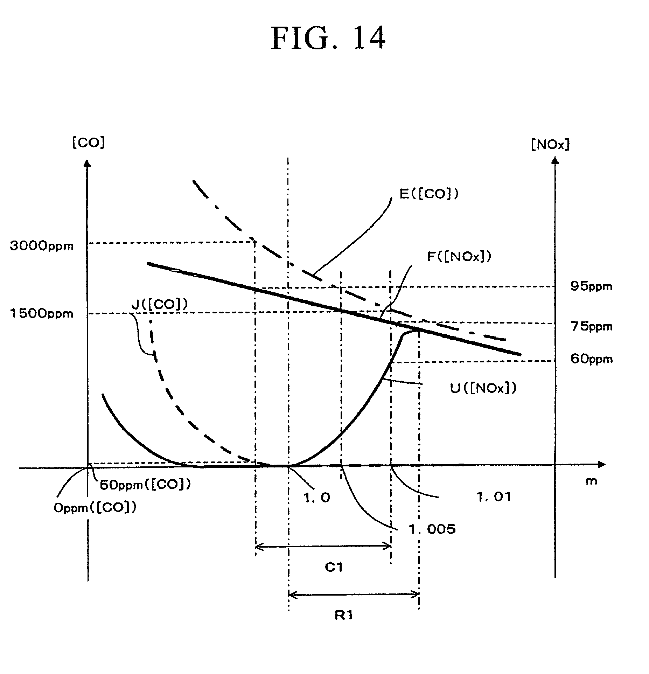

As shown in FIG. 14, Embodiment 3 is an example in which the set air ratio is set to such a value that the concentration of NOx of the secondary characteristics is substantially in excess of zero and lower than the concentration of NOx of the primary characteristics. This value is an air ratio of secondary NOx leakage region R1 of the secondary characteristics at which the set air ratio is substantially in excess of 1.0. Adjustment of concentration ratio K in Embodiment 3 is Adjustment 2.

The first control zone C1 in Embodiment 3 is that in which a center of the control range (target air ratio) is an air ratio of 1.005 ($O_2$ concentration : approximately 1,000 ppm), the left end shown in FIG. 14 is an air ratio of substantially 1.0, and the right end is an air ratio of 1.01 ($O_2$ concentration : approximately 2,000 ppm). In Embodiment 3, the air ratio of the left end is set in a region which has an air ratio of lower than 1.0. When an explanation is given by referring to FIG. 8, the air ratio is to be controlled in the secondary NOx leakage region (a region at which Adjustment 2 is realized) R1 where the concentration of oxygen on the primary side of the catalyst 4 is higher than the reference oxygen concentration SK.

(Experiment 3)

In Embodiment 3, where experiments were conducted under the same conditions as those of Experiment 1 (excluding the set air ratio), the concentration of CO, that of NOx, and that of $O_2$ on the primary side of the catalyst 4 (before passage of the catalyst 4) were adjusted to 1,878 ppm, 78 ppm, and 3,192 ppm in terms of an average value for 10 minutes, respectively, and those on the secondary side of the catalyst 4 (after passage of the catalyst 4) were adjusted to 0 ppm, 42 ppm, and 1,413 ppm in terms of an average value for 10 minutes, respectively.

As apparent from Experiment 3, air ratio control in Embodiment 3 is able to decrease the concentration of emitted NOx to a value lower than the concentration of NOx of the primary characteristics due to reduction action of the catalyst 4 and also decrease the concentration of emitted CO to zero.

In Embodiment 3, the first control zone C1 can be freely set in a range of the secondary NOx leakage region R1. NOx can be decreased to a greater extent and energy is saved more effectively, as the first control zone C1 is brought closer to an air ratio of 1. However, since the concentration of CO to be treated is high (in the case of a steep concentration gradient), there is an easy leakage of CO, which makes the control more difficult to require a greater amount of catalyst. Therefore, the first control zone C1 is set to the right side shown in FIG. 14 so as to be distant away from an air ratio of 1, thus making it possible to obtain an easy control and decrease the amount of the catalyst 4.

More specifically, the left end of the first control zone C1 is not set to an air ratio of 1.0 or lower (FIG. 14) but can be set to an air ratio of 1.0. Further, the left end of the first control zone C1 can be set to a value exceeding the air ratio of 1.

Embodiment 4

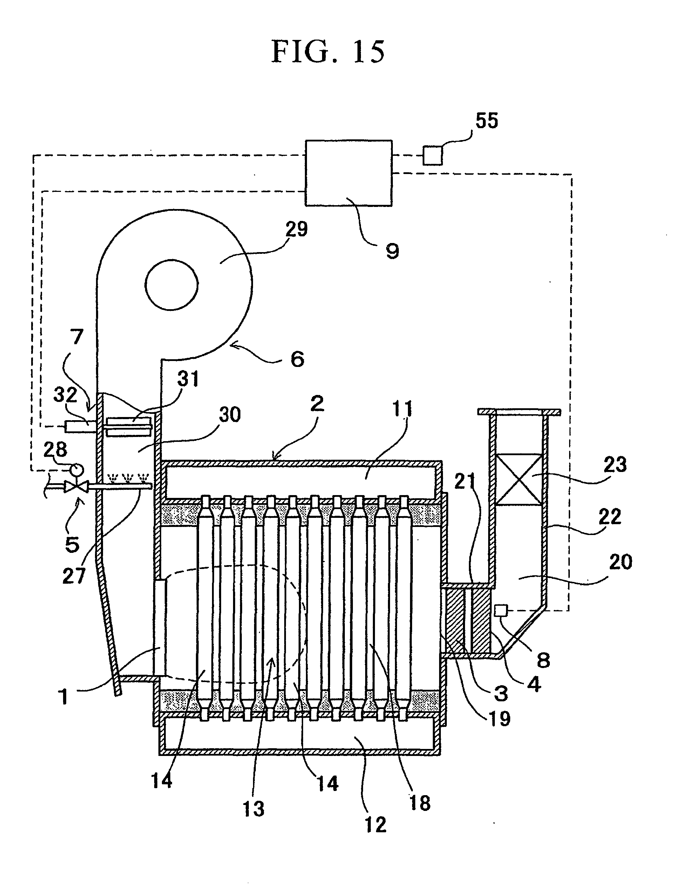

As shown in FIG. 15, Embodiment 4 is an embodiment in the case where gas fuel supplied by the fuel gas supply tube 27 is free of an odorant in Embodiment 1. What is different from Embodiment 1 is that the sulfur component removing device 10 is omitted. The remaining configuration is the same as that in Embodiment 1, so the description thereof will be omitted.

The present invention is not limited to Embodiments 1 to 4. For example, a curve and a concentration value vary depending upon the configurations of the burner 1 and the storage water heater body 3 of the combustion apparatus, so different characteristics can be used as the characteristics of air ratio-NOx/CO shown in FIGS. 5 and 14. Further, in Embodiments 1 to 4, although the set air ratio is 1.0 or more, the set air ratio can be a value lower than the air ratio of 1.0 in a range not impairing a combustion property and not generating hydrocarbon.

Further, in Embodiment 2, although the $O_2$ concentration sensor is used as the sensor 7, a CO concentration sensor can be used. Further, the configuration of a damper position adjusting device 32 can be varied variously. Further, as the motor 36, for example, a gear motor (not shown) other than a stepping motor can be used. Further, although the damper position adjusting device 30 is controlled by a single controller (controller for controlling a boiler) 9, another controller (not shown) for the damper position adjusting device 32 can be provided separately from the controller 9, and the controller can be connected to the sensor 8 and the controller 9 to control an air ratio. Further, the air-ratio adjusting device 7 can be configured by controlling a motor (not shown) for driving the blower 29 with an inverter.

Industrial Applicability

In a catalyst degradation preventing apparatus of a catalyst device containing a catalyst component that comes into contact with gas to chemically change the gas, the decrease in performance of the catalyst device is prevented, and the effect of decreasing pollution can be retained for a long period of time.

**Claims**

1. A catalyst degradation preventing apparatus, which is for a catalyst device containing a catalyst component that comes into contact with gas to chemically change the gas,
   wherein the catalyst device is provided with a poisoning substance removing device on a primary side thereof, for removing a poisoning substance which is contained in the gas and adsorbs to the catalyst component or forms a compound with the catalyst component.

2. A catalyst degradation preventing apparatus according to claim 1, wherein the poisoning substance removing device and the catalyst device are provided with an interval placed therebetween and to be exchangeable with each other.

3. A catalyst degradation preventing apparatus according to claim 1, wherein a carrier of a component that adsorbs to the poisoning substance of the poisoning substance removing device or forms a compound with the poisoning substance and a carrier of a catalyst component of the catalyst device are integrally formed so as to be exchangeable.

4. A catalyst degradation preventing apparatus according to claim 1, wherein an amount of the catalyst component contained in the poisoning substance removing device is smaller than that of the catalyst device, including zero.

5. A low NOx combustion apparatus, comprising:

   a burner for generating a gas containing oxygen, nitrogen oxides, and carbon monoxide by combustion;
   an endothermic device for absorbing heat from the gas;
   a catalyst device having a catalyst component for oxidizing carbon monoxide contained in the gas after passing through the endothermic device by oxygen and reducing nitrogen oxides by carbon monoxide;

a poisoning substance removing device provided on a primary side of the catalyst device, for removing a poisoning substance containing at least sulfur, which is contained in the gas and adsorbs to the catalyst component or forms a compound with the catalyst component;
a sensor for detecting an air ratio of the burner; and
an air-ratio adjusting device for controlling an air ratio of the burner to a set air ratio based on a detected signal of the sensor,
wherein the burner and the endothermic device are configured so as to adjust a concentration ratio of oxygen, nitrogen oxides, and carbon monoxide in a gas on a primary side of the catalyst device to a predetermined concentration ratio at which a concentration of nitrogen oxides on a secondary side of the catalyst device is decreased to substantially zero or a predetermined value or less, and a concentration of carbon monoxide on the secondary side of the catalyst device is decreased to substantially zero or a predetermined value or less, when the air ratio is adjusted to the set air ratio by the air-ratio adjusting device.

6. A low NOx combustion apparatus, comprising:

a burner for generating a gas containing oxygen, nitrogen oxides, and carbon monoxide by combustion;
an endothermic device for absorbing heat from the gas;
a catalyst device having a catalyst component for oxidizing carbon monoxide contained in the gas after passing through the endothermic device by oxygen and reducing nitrogen oxides by carbon monoxide;
a poisoning substance removing device provided on a primary side of the catalyst device, for removing a poisoning substance containing at least sulfur, which is contained in the gas and adsorbs to the catalyst component or forms a compound with the catalyst component;
a sensor for detecting an air ratio of the burner; and
an air-ratio adjusting device for controlling an air ratio of the burner to a set air ratio based on a detected signal of the sensor,
wherein the burner and the endothermic device are configured so as to conduct a concentration ratio adjustment of adjusting a concentration ratio K of oxygen, nitrogen oxides, and carbon monoxide in a gas on a primary side of the catalyst device, when the air ratio is adjusted to the set air ratio by the air-ratio adjusting device, and the concentration ratio adjustment is either of the following Adjustment 0, Adjustment 1, and Adjustment 2:

Adjustment 0: the concentration ratio K is adjusted to a predetermined reference concentration ratio K0 in which a concentration of nitrogen oxides and a concentration of carbon monoxide on the secondary side of the catalyst device are decreased to substantially zero;
Adjustment 1: the concentration ratio K is adjusted to a first predetermined concentration ratio K1 in which the concentration of nitrogen oxides on the secondary side of the catalyst device is decreased to substantially zero and the concentration of carbon monoxide on the secondary side of the catalyst device is decreased to a predetermined value or less; and
Adjustment 2: the concentration ratio K is adjusted to a second predetermined concentration ratio K2 in which the concentration of carbon monoxide on the secondary side of the catalyst device is decreased to substantially zero and the concentration of nitrogen oxides on the secondary side of the catalyst device is decreased to a predetermined value or less.

7. A low NOx combustion apparatus according to claim 6, wherein a formula of determining the predetermined reference concentration ratio K0 is the following formula (1), the predetermined reference concentration ratio K0 satisfies the following formula (2), the first predetermined concentration ratio K1 is smaller than the predetermined reference concentration ratio K0, and the second predetermined concentration ratio K2 is larger than the predetermined reference concentration ratio K0:

$$([NOx] + 2[O_2]) \; / \; [CO] \; = \; K \; \ldots \; (1)$$

$$1.0 \; \leq \; K \; = \; K0 \; \leq \; 2.0 \; \ldots \; (2)$$

where [CO], [NOx], and [O$_2$] represent concentrations of carbon monoxide, nitrogen oxides, and oxygen, respectively, and satisfying a condition of [O$_2$] > 0.

8. A low NOx combustion apparatus, comprising:

a burner for generating a gas containing oxygen, nitrogen oxides, and carbon monoxide by combustion;
an endothermic device for absorbing heat from the gas;
a catalyst device having a catalyst component for oxidizing carbon monoxide contained in the gas after passing through the endothermic device by oxygen and reducing nitrogen oxides by carbon monoxide;
a poisoning substance removing device provided on a primary side of the catalyst device, for removing a poisoning substance containing at least sulfur, which is contained in the gas and adsorbs to the catalyst component or forms a compound with the catalyst component;
a sensor for detecting an air ratio of the burner; and
an air-ratio adjusting device for controlling an air ratio of the burner to a set air ratio based on a detected signal of the sensor,
wherein the burner and the endothermic device are configured so that a concentration ratio of the gas on a primary side of the catalyst satisfies the following formula (3), when the air ratio is adjusted to the set air ratio by the air-ratio adjusting device:

$$([NOx] + 2[O_2]) \ / \ [CO] \le 2.0 \ \ldots \ (3)$$

where [CO], [NOx], and [O_2] represent concentrations of carbon monoxide, nitrogen oxides, and oxygen, respectively, and satisfying a condition of $[O_2] > 0$.

9. A low NOx combustion apparatus according to any one of claims 5 to 8, wherein the poisoning substance removing device and the catalyst device are provided with an interval placed therebetween and to be exchangeable with each other.

10. A low NOx combustion apparatus according to any one of claims 5 to 8, wherein a carrier of a component that adsorbs to the poisoning substance of the poisoning substance removing device and a carrier of a catalyst component of the catalyst device are integrally formed so as to be exchangeable.

11. A low NOx combustion apparatus according to any one of claims 5 to 8, wherein an amount of the catalyst component contained in the poisoning substance removing device is smaller than that of the catalyst device, including zero.

FIG. 1

# FIG. 2

# FIG. 3

# FIG. 4

# FIG. 5

## FIG. 6

## FIG. 7

# FIG. 8

# FIG. 9

# FIG. 10

# FIG. 11

| RATIO OF CONCENTRATION | ADJUSTMENT | | CONCENTRATION OF NOx (ppm) | CONCENTRATION OF CO (ppm) | CONCENTRATION OF $O_2$ (ppm) |
|---|---|---|---|---|---|
| 0.91 | ADJUSTMENT 1 | BEFORE PASSING | 88 | 3114 | 1380 |
| | | AFTER PASSING | 0.4 | 103.0 | ≪100 |
| 1.01 | ADJUSTMENT 0 | BEFORE PASSING | 89 | 2949 | 1450 |
| | | AFTER PASSING | 1.0 | 66.0 | ≪100 |
| 1.44 | ADJUSTMENT 0 | BEFORE PASSING | 89 | 2461 | 1730 |
| | | AFTER PASSING | 0.0 | 18.0 | ≪100 |
| 1.63 | ADJUSTMENT 0 | BEFORE PASSING | 89 | 2414 | 1920 |
| | | AFTER PASSING | 0.0 | 9.0 | ≪100 |
| 1.84 | ADJUSTMENT 0 | BEFORE PASSING | 89 | 2250 | 2030 |
| | | AFTER PASSING | 0.8 | 11.0 | ≪100 |
| 2.18 | ADJUSTMENT 2 | BEFORE PASSING | 88 | 2069 | 2210 |
| | | AFTER PASSING | 26.1 | 1.0 | ≪100 |
| 2.55 | ADJUSTMENT 2 | BEFORE PASSING | 88 | 1922 | 2410 |
| | | AFTER PASSING | 57.2 | 1.1 | 510 |
| 5.11 | | BEFORE PASSING | 87 | 1360 | 3430 |
| | | AFTER PASSING | 78.9 | 0.0 | 2220 |

# FIG. 12

# FIG. 13

# FIG. 14

# FIG. 15

## INTERNATIONAL SEARCH REPORT

| International application No. |
|---|
| PCT/JP2008/054055 |

A.  CLASSIFICATION OF SUBJECT MATTER
*B01D53/94*(2006.01)i, *F23C13/00*(2006.01)i, *F23C99/00*(2006.01)i, *F23N1/02*
(2006.01)i, *F23N5/00*(2006.01)i

According to International Patent Classification (IPC) or to both national classification and IPC

B.  FIELDS SEARCHED

Minimum documentation searched (classification system followed by classification symbols)
B01D53/94, F23C13/00, F23C99/00, F23N1/02, F23N5/00

Documentation searched other than minimum documentation to the extent that such documents are included in the fields searched
Jitsuyo Shinan Koho          1922-1996    Jitsuyo Shinan Toroku Koho    1996-2008
Kokai Jitsuyo Shinan Koho    1971-2008    Toroku Jitsuyo Shinan Koho    1994-2008

Electronic data base consulted during the international search (name of data base and, where practicable, search terms used)
JSTPlus(JDreamII), JST7580(JDreamII)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 50-043041 A  (Matsushita Electric Industrial Co., Ltd.),<br>18 April, 1975 (18.04.75),<br>Claims; page 1, left column, lines 9 to 17;<br>page 2, right column, line 12; drawings<br>(Family: none) | 1-4<br>5-11 |
| Y | JP 2004-125378 A  (Miura Co., Ltd.),<br>22 April, 2004 (22.04.04),<br>Par. Nos. [0001], [0041]<br>& US 2004/0025805 A1    & KR 10-2004-0007318 A | 5-11 |

☐  Further documents are listed in the continuation of Box C.        ☐  See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>13 May, 2008 (13.05.08) | Date of mailing of the international search report<br>27 May, 2008 (27.05.08) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007066309 A
- JP 2007130789 A
- JP 3221582 B
- US 5353748 A
- JP 2004125378 A
- US 6792895 B
- JP 2005030034 A
- JP 2006184879 A